# EUROPEAN PATENT APPLICATION

(11) **EP 4 800 998 A1**
(43) Date of publication of application: **02.09.2026**
(21) Application number: 24893106.5
(22) Date of filing: 18.10.2024
(51) Int. Cl.: H04L 43/18

(54) **IDENTIFICATION METHOD FOR COMMUNICATION APPARATUS AND RELATED APPARATUS**

(30) Priority: 21.11.2023 CN 202311571301
(71) Applicant: Huawei Technologies Co., Ltd., Shenzhen, Guangdong 518129 (CN)
(72) Inventor: WANG, Zihao, Shenzhen, Guangdong 518129 (CN)
(74) Representative: MERH-IP Matias Erny Reichl Hoffmann Patentanwälte PartG mbB
(86) International application number: PCT/CN2024/125851
(87) International publication number: WO 2025/107947

(57) **Abstract**

This application relates to the field of communication technologies, and discloses an identification method for a communication apparatus and a related apparatus, to reduce interactions between a detection device and a to-be-detected device. In the method, a first communication apparatus obtains information about a first packet sent by a second device to the first device, where the information about the first packet includes a first port number, a first protocol type, and a first payload; and the first communication apparatus sends a first probe packet to the first device, where the first probe packet includes the first port number, the first protocol type, and the first payload.

## Description

This application claims priority to Chinese Patent Application No. 202311571301.5, filed with the China National Intellectual Property Administration on November 21, 2023 and entitled "IDENTIFICATION METHOD FOR communication apparatus AND RELATED APPARATUS", which is incorporated herein by reference in its entirety.

### TECHNICAL FIELD

Embodiments of this application relate to the field of communication technologies, and in particular, to an identification method for a communication apparatus and a related apparatus.

### BACKGROUND

With in-depth integration of new technologies such as cloud computing, big data, and internet of things with services, a boundary-based security architecture of enterprise internal networks is facing challenges, making the enterprise internal networks prone to vulnerabilities.

For example, for asset inventory for device information of an enterprise internal network, when a vulnerability appears in devices of a specific type, the enterprise can quickly learn of, based on these device information, how many devices within the internal network are affected by the vulnerability. During asset inventory, a port number of a to-be-detected device may be determined, and then a device fingerprint library is searched for all protocol types corresponding to the port number. Because specific protocol types supported by the to-be-detected device cannot be learned of, a detection device needs to generate a probe packet corresponding to each protocol type in the fingerprint library. Therefore, multiple rounds of interaction between the detection device and the to-be-detected device is required, increasing network pressure.

Therefore, during detection on the to-be-detected device, how to reduce interactions between the detection device and the to-be-detected device is an urgent technical problem to be resolved.

### SUMMARY

Embodiments of this application provide an identification method for a communication apparatus and a related apparatus, to reduce interactions between a detection device and a to-be-detected device.

A first aspect of this application provides a method for online learning of a probe packet, applied to a first communication apparatus. This method includes: A first communication apparatus obtains information about a first packet sent by a second device to the first device, where the information about the first packet includes a first port number, a first protocol type, and a first payload; and the first communication apparatus sends a first probe packet to the first device, where the first probe packet includes the first port number, the first protocol type, and the first payload.

In this solution, the first probe packet is obtained by learning the first packet sent by the second device to the first device. Specifically, a port number, a protocol type, and a payload of the first probe packet are the same as a port number, a protocol type, and a payload of the first packet. Because the protocol type of the first probe packet is the same as the protocol type of the first packet, that the first device supports the protocol type of the first packet means that the first device also supports the protocol type of the first probe packet. Therefore, in this application, a protocol type supported by the first device may be obtained by online learning of a packet exchanged between the first device and the second device, to obtain the first probe packet having the same protocol type. A detection device performs detection and identification on a to-be-detected device based on the probe packet obtained by using the foregoing method, without a need of sending a corresponding probe packet to the to-be-detected device based on each possible protocol type, to effectively reduce interactions between the detection device and the to-be-detected device, thereby reducing network pressure.

In a possible implementation of the first aspect, the first communication apparatus obtains information about a second packet sent by the first device to the second device, where the information about the second packet includes a second payload; and the first probe packet is a valid packet when the following condition is satisfied, where the condition includes: After the first probe packet is sent, the first communication apparatus receives a third packet sent by the first device, where the third packet includes the second payload.

In this solution, when the third packet also includes the second payload, it indicates that the first probe packet obtained through learning based on the first packet can trigger, like the first packet, the first device to send a packet including the second payload. This may indicate validity of the first probe packet. Therefore, the first communication apparatus determines, by verifying whether the received third packet includes the second payload, whether the first probe packet is valid, so that valid probe packets can be retained and invalid probe packets can be discarded based on a verification result, thereby improving validity of a finally obtained probe packet.

In a possible implementation of the first aspect, a destination internet protocol (Internet Protocol, IP) address of the first probe packet is a destination IP address of the first packet or an IP address of the to-be-detected device.

In a possible implementation of the first aspect, a destination media access control address (Media Access Control Address, MAC) address of the first probe packet is a destination MAC address of the first packet or a MAC address of the to-be-detected device.

In this solution, when the destination IP address of the first probe packet is the same as that of the first packet, the first probe packet can be sent to the first device, and whether the first probe packet is valid is determined based on the third packet sent by the first device. When the destination IP address of the first probe packet is the IP address of the to-be-detected device, the first probe packet can be sent to the to-be-detected device, to perform detection on the to-be-detected device. When the destination MAC address of the first probe packet is the same as that of the first packet, the first probe packet can be sent to the first device, and whether the first probe packet is valid is determined based on the third packet sent by the first device. When the destination MAC address of the first probe packet is the MAC address of the to-be-detected device, the first probe packet can be sent to the to-be-detected device, to perform detection on the to-be-detected device.

In a specific design, the first port number is a destination port number of the first packet.

In a specific design, a destination port number of the first probe packet is the destination port number of the first packet or a port number of the to-be-detected device, and the port number of the to-be-detected device may be a port number of a server of the to-be-detected device or a port number of an application in the to-be-detected device.

In a possible implementation of the first aspect, the first communication apparatus obtains information about a fourth packet sent by the second device to the first device, where the information about the fourth packet includes a second port number, a second protocol type, and a third payload; and the first communication apparatus sends a second probe packet to the first device, where the second probe packet includes the second port number, the second protocol type, and the third payload.

In this solution, the first probe packet is generated by learning the first packet sent by the second device to the first device, and the second probe packet is generated by learning the fourth packet sent by the second device to the first device, so that when the first probe packet is invalid, detection may be performed by using the second probe packet. In addition, because information carried in the fourth packet may be different from that carried in the second packet, the finally obtained second probe packet may also be different from the first probe packet. This increases diversity of probe packets in this solution, so that this solution can be applied to more diversified scenarios.

In a specific design, a destination IP address of the second probe packet is a destination IP address of the fourth packet or the IP address of the to-be-detected device.

In a specific design, a destination MAC address of the second probe packet is a destination MAC address of the fourth packet or the MAC address of the to-be-detected device.

In a possible implementation of the first aspect, the first communication apparatus obtains information about a fifth packet sent by a fourth device to a third device, where the information about the fifth packet includes a third port number, a third protocol type, and a fourth payload; and the first communication apparatus sends a third probe packet to the third device, where the third probe packet includes the third port number, the third protocol type, and the fourth payload.

In this solution, because the fourth device and the second device may belong to different types of devices, and the third device and the first device may also belong to different types of devices, probe packets are generated by learning packets of different types of devices, so that this solution is applicable to detection on different types of devices.

In a specific design, the third device and the first device are a same device, or IP addresses of the third device and the first device belong to a same network segment.

In a specific design, the fourth device and the second device are a same device, or IP addresses of the fourth device and the second device belong to a same network segment.

In a specific design, a destination IP address of the third probe packet is a destination IP address of the fifth packet or the IP address of the to-be-detected device.

In a specific design, a destination MAC address of the third probe packet is a destination MAC address of the fifth packet or the MAC address of the to-be-detected device.

In a specific design, the first communication apparatus sends a fourth probe packet to the first device, where the fourth probe packet includes the first port number, the first protocol type, and the first payload.

In this solution, the first probe packet and the fourth probe packet are generated by learning the first packet, so that when the first probe packet is invalid, the first communication apparatus may perform detection on the to-be-detected device by using the fourth probe packet.

In a specific design, a destination IP address of the fourth probe packet is the destination IP address of the first packet or the IP address of the to-be-detected device.

In a specific design, a destination MAC address of the fourth probe packet is the destination MAC address of the first packet or the MAC address of the to-be-detected device.

In a possible implementation of the first aspect, the destination IP address of the first packet is a multicast or broadcast IP address or an IP address of the first device; and/or the destination MAC address of the first packet is a multicast or broadcast MAC address or a MAC address of the first device.

That the first packet can only be a packet that supports only point-to-point communication, like a transmission control protocol (Transmission Control Protocol, TCP) packet is not limited in this solution. The first packet in this solution may alternatively be a packet that is multicast or broadcast-capable, like a SIP packet. Therefore, the destination IP address of the first packet may be the multicast or broadcast IP address or the IP address of the first device, and the same applies to the destination MAC address of the first packet.

In a possible implementation of the first aspect, both the first probe packet and the first packet are first protocol packets, and both the to-be-detected device and the first device support the first protocol. In a specific implementation, the first protocol includes: open network video interface forum (Open Network Video Interface Forum, ONVIF) protocol, session initiation protocol (Session Initiation Protocol, SIP), multicast domain name service (Multicast Domain Name Service, mDNS) protocol, or protocols defined by manufacturers of the first device and the to-be-detected device. In a specific implementation, the first protocol may further include: TCP, user datagram protocol (User Datagram Protocol, UDP), IP, or hypertext transfer protocol (Hypertext Transfer Protocol, HTTP).

In this solution, a reason why both the first probe packet and the first packet are the first protocol packets is that a protocol format of the first packet is learned during generation of the first probe packet, and the first probe packet that can be used to perform detection on a device is constructed based on the protocol format of the first packet. A probe packet is constructed based on a protocol format of a packet actually sent in a device interaction process, so that the probe packet in this solution can be more practical.

In a possible implementation of the first aspect, the first probe packet is the first protocol packet, the first packet is a second protocol packet, the to-be-detected device supports the first protocol, and the first device supports both the first protocol and the second protocol.

In this solution, the first probe packet is based on the first protocol, and the first packet is based on the second protocol. In this case, it is only necessary to ensure that the to-be-detected device supports the first protocol and that the first device supports both the first protocol and the second protocol, so that this solution is applicable to a scenario in which the to-be-detected device does not support the first protocol but supports only the second protocol.

In this solution, the first probe packet may be an ONVIF protocol packet, a SIP packet, or an mDNS protocol packet. The ONVIF protocol packet is generally a packet exchanged when a device performs a video service, the SIP packet is generally a packet exchanged when a device performs a session, and the mDNS protocol packet is generally a packet used by hosts in a local area network to implement mutual communication. Therefore, the first probe packet may be used to perform detection on devices in these scenarios. It can be learned that the first probe packet in this solution can be applied to a wide range of scenarios. The first probe packet may alternatively be based on the protocol defined by the manufacturer of the to-be-detected device. If the first probe packet is sent to to-be-detected devices of different types, and packets sent by the to-be-detected devices of the different manufacturers are received, because protocols defined by different manufacturers are different, information carried in the packets sent by the to-be-detected devices of the different manufacturers varies greatly. Therefore, device information such as the manufacturer of the to-be-detected device may be determined based on the information varying greatly.

In a possible implementation of the first aspect, the first communication apparatus mirrors the first packet from a fifth device, where the fifth device is an intermediate device between the first device and the second device; and the first communication apparatus obtains the information about the first packet based on the first packet.

In a specific design, the first communication apparatus may obtain the first packet in a port mirroring or traffic mirroring manner.

In a specific design, the fifth device is a network device. For example, the network device includes but is not limited to a switch, a router, or a firewall.

In a specific design, when the first communication apparatus is a network device, the first communication apparatus may directly mirror the first packet through a local port without using an intermediate device.

In a specific design, the first communication apparatus may read the first packet to obtain the information about the first packet.

In a specific design, the first communication apparatus receives the information about the first packet sent by the fifth device.

In a possible implementation of the first aspect, the first communication apparatus receives the information about the second packet sent by the fifth device.

In a specific design, the fifth device mirrors the second packet, and sends the information about the second packet to the first communication apparatus.

In a specific design, the first communication apparatus mirrors the second packet from the fifth device, to obtain the information about the second packet, where the fifth device is an intermediate device between the first device and the second device.

In a specific design, the first communication apparatus may obtain the second packet in a port mirroring or traffic mirroring manner.

In a possible implementation of the first aspect, the first communication apparatus obtains a plurality of packets sent by the first device to the second device; the first communication apparatus matches a key field of each of the plurality of packets with a field library; and the first communication apparatus obtains the information about the second packet based on a packet in the plurality of packets that successfully matches the field library.

In a specific design, after obtaining the plurality of packets, the first communication apparatus may extract the key field from the packets based on a data mining algorithm. For example, the data mining algorithm includes but is not limited to: term frequency-inverse document frequency (Term frequency-inverse document frequency, TF-IDF), TextRank, or linear discriminant analysis (Linear Discriminant Analysis, LDA).

In a possible implementation of the first aspect, the field library is used to describe device information. In a specific implementation, the field library includes one or more of the following fields: device brand name, device model name, device type, or device serial number.

In a specific design, the key field may be a field with a high occurrence frequency in the packet, and a field in the field library describes commonality in the device information.

In a specific design, the first communication apparatus may match the key field with the field library in the following manner: calculating, by using a similarity algorithm, a similarity between the key field and the field in the field library. When the similarity is greater than a threshold, it is considered that the key field is successfully matched; or when the similarity is equal to or less than the threshold, it is considered that the key field fails to be matched.

In a possible implementation of the first aspect, in response to the second payload including device information of the first device, the first communication apparatus obtains the information about the first packet based on the information about the second packet; and the first communication apparatus generates the first probe packet based on the information about the first packet.

In this solution, when the second payload includes the device information of the first device, it indicates that the first packet carries the device information. During communication between the first device and the second device, the second device sends the first packet to the first device, and the second device is triggered to send the second packet to the first device. Therefore, the first communication apparatus needs to obtain the first packet, and then obtain the first probe packet by learning the first packet, to trigger, by using the first probe packet, the first device to send a packet that is similar to the second packet and that includes the device information.

In a possible implementation of the first aspect, the first communication apparatus obtains the information about the first packet based on a source IP address of the second packet and a destination IP address of the second packet, where the information about the second packet includes: the source IP address of the second packet and the destination IP address of the second packet, the source IP address of the second packet is the IP address of the first device, and the destination IP address of the second packet is an IP address of the second device; and/or the first communication apparatus obtains the information about the first packet based on a source MAC address of the second packet and a destination MAC address of the second packet, where the information about the second packet includes: the source MAC address of the second packet and the destination MAC address of the second packet, the source MAC address of the second packet is the MAC address of the first device, and the destination MAC address of the second packet is a MAC address of the second device.

In this solution, the first packet is a packet sent by the second device to the first device, the second packet is a packet sent by the first device to the second device, a source IP address of the first packet is the destination IP address of the second packet, and the destination IP address of the first packet is the source IP address of the second packet. Therefore, the source IP address and the destination IP address of the second packet can be determined based on the first packet. When obtaining the plurality of packets, the first communication apparatus may find the first packet from the plurality of packets based on the source IP address and the destination IP address.

In a possible implementation of the first aspect, the first communication apparatus sends the first probe packet to the to-be-detected device; receives a sixth packet sent by the to-be-detected device; and obtains device information of the to-be-detected device by parsing the sixth packet.

In this solution, after generating the first probe packet, the first communication apparatus may perform detection on the to-be-detected device by using the first probe packet, without a need of sending the first probe packet to another device and then perform detection on the to-be-detected device through the another device. In this manner, time overheads caused by exchanging of the first probe packet between the first communication apparatus and another device are reduced, and network resources are also saved.

In a possible implementation of the first aspect, the first communication apparatus sends the second probe packet to the to-be-detected device; receives a seventh packet sent by the to-be-detected device; and obtains device information of the to-be-detected device by parsing the seventh packet.

In a possible implementation of the first aspect, the first communication apparatus sends the third probe packet to the to-be-detected device; receives an eighth packet sent by the to-be-detected device; and obtains device information of the to-be-detected device by parsing the eighth packet.

In a specific design, the first communication apparatus receives the fourth probe packet sent by the fifth device, sends the fourth probe packet to the to-be-detected device, receives a ninth packet sent by the to-be-detected device, and obtains device information of the to-be-detected device by parsing the ninth packet.

In a specific design, the first communication apparatus may alternatively send the first probe packet to a network segment to which the IP address of the to-be-detected device belongs, receive a tenth packet sent by the to-be-detected device, and obtain device information of the to-be-detected device by parsing the tenth packet.

A second aspect of this application provides an identification method for a communication apparatus, applied to a second communication apparatus, including: The second communication apparatus receives a network segment to which an IP address of a to-be-detected device belongs, and then sends a first probe packet to the network segment, where a port number, a protocol type, and a payload of the first probe packet are the same as a port number, a protocol type, and a payload of a first packet sent by a second device to a first device; and the second communication apparatus receives a second packet sent by the to-be-detected device, and then obtains device information of the to-be-detected device by parsing the second packet.

In this solution, the second communication apparatus may send the first probe packet to the network segment to which the IP address of the to-be-detected device belongs. Even if the specific IP address of the to-be-detected device is unknown and only the network segment to which the IP address of the to-be-detected device belongs is known, detection is still performed on the to-be-detected device in this solution. It can be learned that the identification method for a communication apparatus in this application can broaden device detection scenarios.

In a possible implementation of the second aspect, both the first probe packet and the first packet are first protocol packets, and both the to-be-detected device and the first device support the first protocol. In a specific implementation, the first protocol includes: ONVIF, SIP, mDNS, or protocols defined by manufacturers of the first device and the to-be-detected device. In a specific implementation, the first protocol may further include: TCP, UDP, IP, or HTTP.

In a possible implementation of the second aspect, the first probe packet is the first protocol packet, the first packet is a second protocol packet, the to-be-detected device supports the first protocol, and the first device supports both the first protocol and the second protocol.

In this solution, the first probe packet is based on the first protocol, and the first packet is based on the second protocol. In this case, it is only necessary to ensure that the to-be-detected device supports the first protocol and that the first device supports both the first protocol and the second protocol, so that this solution is applicable to a scenario in which the to-be-detected device does not support the first protocol but supports only the second protocol.

In this solution, the first probe packet may be an ONVIF protocol packet, a SIP packet, or an mDNS protocol packet. The ONVIF protocol packet is generally a packet exchanged when a device performs a video service, the SIP packet is generally a packet exchanged when a device performs a session, and the mDNS protocol packet is generally a packet used by hosts in a local area network to implement mutual communication. Therefore, the first probe packet may be used to perform detection on devices in these scenarios. It can be learned that the first probe packet in this solution can be applied to a wide range of scenarios. The first probe packet may alternatively be based on the protocol defined by the manufacturer of the to-be-detected device. If the first probe packet is sent to to-be-detected devices of different types, and packets sent by the to-be-detected devices of the different manufacturers are received, because protocols defined by different manufacturers are different, information carried in the packets sent by the to-be-detected devices of the different manufacturers varies greatly. Therefore, device information such as the manufacturer of the to-be-detected device may be determined based on the information varying greatly.

In a possible implementation of the second aspect, a destination IP address of the first probe packet is a destination IP address of the first packet or each IP address included in the network segment.

In a possible implementation of the second aspect, a destination MAC address of the first probe packet is a destination MAC address of the first packet or a MAC address of the to-be-detected device.

In this solution, when the destination IP address of the first probe packet is the same as that of the first packet, the first probe packet can be sent to the first device, and whether the first probe packet is valid is determined based on the packet sent by the first device. When the destination IP address of the first probe packet is the IP address of the to-be-detected device, the first probe packet can be sent to the to-be-detected device, to perform detection on the to-be-detected device. When the destination MAC address of the first probe packet is the same as that of the first packet, the first probe packet can be sent to the first device, and whether the first probe packet is valid is determined based on the second packet sent by the first device. When the destination MAC address of the first probe packet is the MAC address of the to-be-detected device, the first probe packet can be sent to the to-be-detected device, to perform detection on the to-be-detected device.

In a possible implementation of the second aspect, the second communication apparatus sends a second probe packet to the network segment, where a port number, a protocol type, and a payload of the second probe packet are the same as a port number, a protocol type, and a payload of a third packet sent by the second device to the first device; and the second communication apparatus receives a fourth packet sent by the to-be-detected device, and obtains device information of the to-be-detected device by parsing the fourth packet.

In this solution, the first probe packet is similar to the first packet sent by the second device to the first device, and the second probe packet is similar to the third packet sent by the second device to the first device. Because information carried in the third packet may be different from that carried in the second packet, the second probe packet may also be different from the first probe packet, so that detection may be performed on different to-be-detected devices by using diversified probe packets.

In a possible implementation of the second aspect, the second communication apparatus sends a third probe packet to the network segment, where a port number, a protocol type, and a payload of the third probe packet are the same as a port number, a protocol type, and a payload of a fifth packet sent by a third device to a fourth device; and the second communication apparatus receives a sixth packet sent by the to-be-detected device, and obtains device information of the to-be-detected device by parsing the sixth packet.

In this solution, because the fourth device and the second device may belong to different types of devices, and the third device and the first device may also belong to different types of devices, the third probe packet and the first probe packet are respectively similar to packets of different types of devices, so that the second communication apparatus may perform detection on different types of devices by using the third probe packet and the first probe packet.

In a specific design, the second communication apparatus sends a fourth probe packet to the network segment, where a port number, a protocol type, and a payload of the fourth probe packet are the same as a port number, a protocol type, and a payload of the first packet sent by the second device to the first device.

In this solution, in addition to sending the first probe packet to the network segment, the second communication apparatus further sends the fourth probe packet to the network segment, where both the first probe packet and the fourth probe packet are similar to the first packet, so that when the first probe packet is invalid, the second communication apparatus may perform detection on the to-be-detected device by using the fourth probe packet.

A third aspect of this application provides a packet sending method, applied to a third communication apparatus, including: The third communication apparatus receives a first probe packet sent by a third device, where a port number, a protocol type, and a payload of the first probe packet are the same as a port number, a protocol type, and a payload of a first packet sent by a second device to a first device; and the third communication apparatus sends the first probe packet to the third device, where the first probe packet includes device information of a to-be-detected device.

In this solution, the third communication apparatus does not need to receive a probe packet formulated by the third device based on each possible protocol type, but only needs to receive the first probe packet formulated by the third device based on a protocol type of the first packet. Therefore, a quantity of interactions between the third communication apparatus and the third device is effectively reduced, thereby reducing network pressure.

A fourth aspect of this application provides a communication apparatus. The communication apparatus includes a receiving module, a processing module, and a sending module, and is configured to perform all or some of the operations in the method according to the first aspect, the second aspect, or the third aspect. The communication apparatus may be a network device like a router or a switch, or may be a part of components that is in the network device and that is configured to perform a related operation, for example, a line card or an interface board, or may be a chip system configured to perform a related operation. The chip system may include one or more chips. When the communication apparatus is a chip system, the receiving module and the sending module may be, for example, an interface circuit of a chip, and the processing module may be, for example, a processing circuit of the chip.

For example, when the method according to the first aspect is performed, the processing module is configured to obtain information about a first packet sent by a second device to a first device, where the information about the first packet includes a first port number, a first protocol type, and a first payload; and the receiving module is configured to send a first probe packet to the first device, where the first probe packet includes the first port number, the first protocol type, and the first payload.

In a possible implementation of the fourth aspect, the processing module is further configured to obtain information about a second packet sent by the first device to the second device, where the information about the second packet includes a second payload; and the first probe packet is a valid packet when the following condition is satisfied, where the condition includes: a third packet sent by the first device is received after the first probe packet is sent, where the third packet includes the second payload.

In a possible implementation of the fourth aspect, a destination IP address of the first probe packet is a destination IP address of the first packet or an IP address of a to-be-detected device; and/or a destination MAC address of the first probe packet is a destination MAC address of the first packet or a MAC address of the to-be-detected device.

In a possible implementation of the fourth aspect, the processing module is further configured to obtain information about a fourth packet sent by the second device to the first device, where the information about the fourth packet includes a second port number, a second protocol type, and a third payload; and the sending module is further configured to send a second probe packet to the first device, where the second probe packet includes the second port number, the second protocol type, and the third payload.

In a possible implementation of the fourth aspect, the processing module is further configured to obtain information about a fifth packet sent by a fourth device to a third device, where the information about the fifth packet includes a third port number, a third protocol type, and a fourth payload; and the sending module is further configured to send a third probe packet to the third device, where the third probe packet includes the third port number, the third protocol type, and the fourth payload.

In a possible implementation of the fourth aspect, the destination IP address of the first packet is a multicast or broadcast IP address or an IP address of the first device; and/or the destination MAC address of the first packet is a multicast or broadcast MAC address or a MAC address of the first device.

In a possible implementation of the fourth aspect, both the first probe packet and the first packet are first protocol packets, and both the to-be-detected device and the first device support the first protocol.

In a possible implementation of the fourth aspect, the first probe packet is the first protocol packet, the first packet is a second protocol packet, the to-be-detected device supports the first protocol, and the first device supports both the first protocol and the second protocol.

In a possible implementation of the fourth aspect, the first protocol includes: ONVIF, SIP, mDNS, or protocols defined by manufacturers of the first device and the to-be-detected device.

In a possible implementation of the fourth aspect, the processing module is further configured to: mirror the first packet from a fifth device, where the fifth device is an intermediate device between the first device and the second device; and obtain the information about the first packet based on the first packet.

In a possible implementation of the fourth aspect, the receiving module is further configured to receive the information about the second packet sent by the fifth device.

In a possible implementation of the fourth aspect, the processing module is further configured to: obtain a plurality of packets sent by the first device to the second device; match a key field of each of the plurality of packets with a field library; and obtain the information about the second packet based on a packet in the plurality of packets that successfully matches the field library.

In a possible implementation of the fourth aspect, the field library includes one or more of the following fields: device brand name, device model name, device type, or device serial number.

In a possible implementation of the fourth aspect, the processing module is further configured to: in response to the second payload including device information of the first device, obtain the information about the first packet based on the information about the second packet; and generate the first probe packet based on the information about the first packet.

In a possible implementation of the fourth aspect, the processing module is further configured to: obtain the information about the first packet based on a source IP address of the second packet and a destination IP address of the second packet, where the information about the second packet includes: the source IP address of the second packet and the destination IP address of the second packet, the source IP address of the second packet is the IP address of the first device, and the destination IP address of the second packet is an IP address of the second device; and/or obtain the information about the first packet based on a source MAC address of the second packet and a destination MAC address of the second packet, where the information about the second packet includes: the source MAC address of the second packet and the destination MAC address of the second packet, the source MAC address of the second packet is the MAC address of the first device, and the destination MAC address of the second packet is a MAC address of the second device.

In a possible implementation of the fourth aspect, the sending module is further configured to send the first probe packet to the to-be-detected device; the receiving module is further configured to receive a sixth packet sent by the to-be-detected device; and the processing module is further configured to obtain device information of the to-be-detected device by parsing the sixth packet.

In a possible implementation of the fourth aspect, the sending module is further configured to send the second probe packet to the to-be-detected device; the receiving module is further configured to receive a seventh packet sent by the to-be-detected device; and the processing module is further configured to obtain device information of the to-be-detected device by parsing the seventh packet.

In a possible implementation of the fourth aspect, the sending module is further configured to send the third probe packet to the to-be-detected device; the receiving module is further configured to receive an eighth packet sent by the to-be-detected device; and the processing module is further configured to obtain device information of the to-be-detected device by parsing the eighth packet.

For example, when the method according to the second aspect is performed, the receiving module is configured to receive a network segment to which the IP address of the to-be-detected device belongs; the sending module is further configured to send the first probe packet to the network segment, where a port number, a protocol type, and a payload of the first probe packet are the same as a port number, a protocol type, and a payload of the first packet sent by the second device to the first device; the receiving module is further configured to receive the second packet sent by the to-be-detected device; and the processing module is configured to obtain device information of the to-be-detected device by parsing the second packet.

In a possible implementation of the fourth aspect, both the first probe packet and the first packet are first protocol packets, and both the to-be-detected device and the first device support the first protocol.

In a possible implementation of the fourth aspect, the first probe packet is the first protocol packet, the first packet is a second protocol packet, the to-be-detected device supports the first protocol, and the first device supports both the first protocol and the second protocol.

In a possible implementation of the fourth aspect, the first protocol includes: ONVIF, SIP, mDNS, or protocols defined by manufacturers of the first device and the to-be-detected device.

In a possible implementation of the fourth aspect, a destination IP address of the first probe packet is a destination IP address of the first packet or each IP address included in the network segment; and/or a destination MAC address of the first probe packet is a destination MAC address of the first packet or a MAC address of the to-be-detected device.

In a possible implementation of the fourth aspect, the sending module is further configured to send a second probe packet to the network segment, where a port number, a protocol type, and a payload of the second probe packet are the same as a port number, a protocol type, and a payload of a third packet sent by the second device to the first device; the receiving module is further configured to receive a fourth packet sent by the to-be-detected device; and the processing module is further configured to obtain device information of the to-be-detected device by parsing the fourth packet.

In a possible implementation of the fourth aspect, the sending module is further configured to send a third probe packet to the network segment, where a port number, a protocol type, and a payload of the third probe packet are the same as a port number, a protocol type, and a payload of a fifth packet sent by a third device to a fourth device; the receiving module is further configured to receive a sixth packet sent by the to-be-detected device; and the processing module is further configured to obtain device information of the to-be-detected device by parsing the sixth packet.

For example, when the method according to the third aspect is performed, the receiving module is configured to receive the first probe packet sent by the third device, where a port number, a protocol type, and a payload of the first probe packet are the same as a port number, a protocol type, and a payload of the first packet sent by the second device to the first device; and the sending module is configured to send the first packet to the third device, where the first packet includes the device information of the to-be-detected device.

A fifth aspect of this application provides a communication apparatus, including a processor and a communication interface. The processor and the communication interface are configured to perform the method according to any one of the possible implementations of the first aspect, the second aspect, or the third aspect.

In a specific design, the processor is coupled to a memory. For example, the memory is configured to store a program or instructions. The at least one processor is configured to execute the program or the instructions, so that the apparatus implements all or some operations of the method according to any one of the possible implementations of the first aspect, the second aspect, or the third aspect.

A sixth aspect of this application provides a computer-readable storage medium. The medium stores a program or instructions. When the program or the instructions are run on a processor, the method according to any one of the possible implementations of the first aspect, the second aspect, or the third aspect is performed.

A seventh aspect of this application provides a computer program product, including a program or instructions. When the program or the instructions are run on a processor, all or some operations of the method according to any one of the possible implementations of the first aspect, the second aspect, or the third aspect are implemented. In a specific implementation, the computer program product may be the computer-readable storage medium mentioned in the sixth aspect.

An eighth aspect of this application provides a communication system. The communication system includes the communication apparatus according to the fourth aspect or the communication apparatus according to the fifth aspect.

For technical effects brought by any design manner in the fourth aspect to the eighth aspect, refer to the technical effects brought by the first aspect to the third aspect and different design manners of the first aspect to the third aspect. Details are not described herein again.

### BRIEF DESCRIPTION OF DRAWINGS

FIG. 1 is a diagram of a system architecture of an identification method for a communication apparatus according to an embodiment of this application;
FIG. 2 is a schematic flowchart of a method 100 for online learning of a probe packet according to an embodiment of this application;
FIG. 3 is a diagram of a structure of a packet 1 and a structure of a probe packet 1 according to an embodiment of this application;
FIG. 4 is a schematic flowchart of an identification method 200 for a communication apparatus according to an embodiment of this application;
FIG. 5 is a diagram of collaboration between apparatuses according to Embodiment 1;
FIG. 6 is a schematic flowchart according to Embodiment 1;
FIG. 7 is a diagram of collaboration between apparatuses according to Embodiment 2;
FIG. 8 is a schematic flowchart according to Embodiment 2;
FIG. 9 is a diagram of a structure of a communication apparatus according to an embodiment of this application; and
FIG. 10 is another diagram of a structure of a communication apparatus according to an embodiment of this application.

### DESCRIPTION OF EMBODIMENTS

To make objectives, the technical solutions, and advantages of embodiments of this application clearer, the following further describes implementations of embodiments of this application in detail with reference to the accompanying drawings.

The following describes some terms in embodiments of this application.
1. A terminal device in embodiments of this application includes a device that provides a voice for a user, a device that provides data connectivity for the user, and a device that provides the voice and the data connectivity for the user. For example, the terminal device may include a handheld device having a wireless connection function or a processing device connected to a wireless modem. The terminal device may also be referred to as a terminal for short. The terminal may communicate with a core network through a radio access network (radio access network, RAN), and exchange a voice or data with the RAN, or interact the voice and the data with the RAN. The terminal may include user equipment (user equipment, UE), a wireless terminal, a mobile terminal, a device-to-device (device-to-device, D2D) terminal, a vehicle to everything (vehicle to everything, V2X) terminal, a road side unit (road side unit, RSU), a machine-to-machine/machine-type communication (machine-to-machine/machine-type communication, M2M/MTC) terminal, an internet of things (internet of things, IoT) terminal, a subscriber unit (subscriber unit), a subscriber station (subscriber station), a mobile station (mobile station), a remote station (remote station), an access point (access point, AP), a remote terminal (remote terminal), an access terminal (access terminal), a user agent (user agent), a user device (user device), or the like. The terminal may include a mobile phone (or referred to as a "cellular" phone), a computer having a mobile terminal, a portable, pocket-sized, handheld, or computer built-in mobile apparatus, or the like. The terminal may include devices such as a personal communications service (personal communication service, PCS) telephone, a cordless telephone, a telephone, a wireless local loop (wireless local loop, WLL) station, and a personal digital assistant (personal digital assistant, PDA). The terminal further includes a limited device, a device with low power consumption, a device with a limited storage capability, or a device with a limited computing capability. The terminal may include an information sensing device, for example, a bar code, radio frequency identification (radio frequency identification, RFID), a sensor, a global positioning system (global positioning system, GPS), or a laser scanner.

By way of example rather than limitation, in embodiments of this application, the terminal device may alternatively be a wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not merely a hardware device, but is used to implement a powerful function through software support, data exchange, and cloud interaction. In a broad sense, wearable intelligent devices include full-featured and large-sized devices that can implement all or a part of functions without depending on smartphones, for example, smart watches or smart glasses, and include devices that dedicated to only one type of application function and need to collaboratively work with other devices such as smartphones, for example, various smart bands, smart helmets, or smart jewelry for monitoring physical signs.

If the terminals described above are located in a vehicle, for example, placed in the vehicle or mounted in the vehicle, the terminals may be all considered as vehicle-mounted terminals. For example, the vehicle-mounted terminals are also referred to as on-board units (on-board units, OBUs).

In embodiments of this application, an apparatus configured to implement a function of the terminal may be a terminal, or may be a chip system that supports the terminal in implementing the function. The chip system may be installed in the terminal. In embodiments of this application, the chip system may include at least one chip, or may include another discrete device.

2. The terms "system" and "network" may be used interchangeably in embodiments of this application. "At least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, and C" includes A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

The following describes a system architecture in an embodiment of this application by using an example.

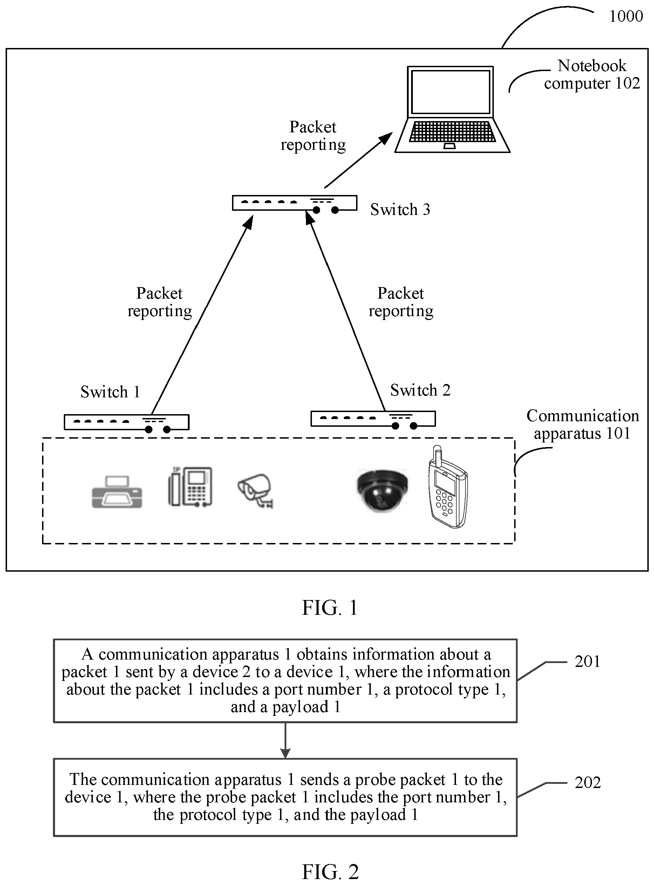

FIG. 1 is a diagram of a possible and non-limiting system architecture according to this application. The solutions provided in this application may be applied to a system 1000 shown in FIG. 1.

The system 1000 includes a communication apparatus 101, a switch 1, a switch 2, a switch 3, and a notebook computer 102. It should be noted that the communication apparatus 101 includes a to-be-detected device, and the communication apparatus 101 may be a terminal device or a network device. The notebook computer 102 is an example of a detection device, and the detection device may alternatively be another terminal device or network device. The communication apparatus 101 may be, for example, a terminal like a printer, an IP phone, a camera, or a mobile phone shown in FIG. 1. Some terminals communicate with the switch 3 through the switch 1, and some terminals communicate with the switch 3 through the switch 2. The switch 3 may mirror a received packet to the notebook computer 102.

It should be noted that the switch 1, the switch 2, and the switch 3 are examples of intermediate devices between the communication apparatus 101 and the notebook computer. The intermediate device is a network device. For example, the network device includes a firewall or a router. In addition, the system 1000 usually includes a plurality of switches, but may alternatively include only one switch. For example, the system 1000 includes only one switch 1. In this case, the communication apparatus 101 reports a packet to the switch 1, and then the switch 1 mirrors the packet to the notebook computer 102.

A possible implementation of performing detection on the to-be-detected device by the notebook computer 102 is: determining a port number of the to-be-detected device, and then searching a device fingerprint library for all protocol types corresponding to the port number. Because specific protocol types supported by the to-be-detected device cannot be learned of, the notebook computer 102 needs to generate a probe packet corresponding to each protocol type in the fingerprint library. Therefore, multiple rounds of interaction between the notebook computer 102 and the to-be-detected device is required, increasing network pressure. In addition, the protocol types included in the fingerprint library are only for packets corresponding to the types that can only be used for point-to-point communication, like TCP/IP. Therefore, when an IP address of the to-be-detected device is unknown, the to-be-detected device cannot be detected.

Therefore, during detection on the to-be-detected device, how to reduce interactions between the detection device and the to-be-detected device, and how to perform detection on the to-be-detected device when the IP address of the to-be-detected device is unknown are technical problems to be urgently resolved.

To resolve the problem that the issue of excessive interactions between the detection device and the to-be-detected device, an embodiment of this application provides a method 100 for online learning of a probe packet. The method 100 may be applied to the scenario shown in FIG. 1. When the method 100 is applied to the scenario shown in FIG. 1, a device 2 in the method 100 may be, for example, the communication apparatus 101 shown in FIG. 1, and a communication apparatus 1 in the method 100 may be, for example, the notebook computer 102 or the switch 3 shown in FIG. 1. In the method 100, a first probe packet is generated by learning a first packet sent by the device 2 to a device 1. In the method 100, it is not necessary to generate a probe packet based on each protocol, but it only needs to generate a probe packet based on a protocol used for the first packet, thereby reducing interactions between the detection device and the to-be-detected device.

With reference to FIG. 2, the following specifically describes the method 100 provided in this embodiment of this application. As shown in FIG. 2, the method 100 for online learning of a probe packet provided in this embodiment of this application includes the following steps.

Step 201: The communication apparatus 1 obtains packet information of a packet 1 sent by the device 2 to the device 1, where the packet information includes a port number 1, a protocol type 1, and a payload 1.

Step 202: The communication apparatus 1 sends a probe packet 1 to the device 1, where the probe packet 1 includes the port number 1, the protocol type 1, and the payload 1.

The communication apparatus 1 may be a terminal device, for example, the notebook computer 102 shown in FIG. 1, or may be a network device, for example, the switch 3 shown in FIG. 1. When the communication apparatus 1 is a network device, the network device may include but is not limited to a switch, a router, or a firewall. It should be noted that the protocol type 1 is a type of a protocol on which the packet 1 is based. For example, the packet 1 is a SIP packet, and the protocol type 1 is SIP.

It should be noted that the payload is used for carrying original data of the packet. A name of the payload may vary in different protocols. For example, in a UDP packet, the payload is referred to as UDP data; and in the SIP packet, the payload is referred to as a message body.

It should be noted that the packet information of the packet 1 may not include the port number 1 and the protocol type 1, but includes information indicating the port number 1 and the protocol type 1. For example, the packet information of the packet 1 includes information indicating a manner of obtaining the port number 1.

It should be noted that, in this embodiment of this application, there is no restriction that the packet 1 needs to be a packet that supports only point-to-point communication, such as a TCP packet. The packet 1 in this embodiment of this application may alternatively be a packet that can be multicast or broadcast, such as a SIP packet. Therefore, the packet 1 may be sent in a unicast, multicast, or broadcast manner. Correspondingly, a destination IP address and a destination media access control (media access control, mac) address of the packet 1 may be in the following forms.

In a possible implementation, the destination IP address of the packet 1 may be a multicast or broadcast IP address, or may be an IP address of the device 1.

In a possible implementation, the destination MAC address of the packet 1 may be a multicast or broadcast MAC address, or may be a MAC address of the device 1.

In addition, the port number 1 may be a destination port number of the packet 1, that is, a port number of the device 1.

In step 201, the packet 1 may be obtained in a plurality of implementations.

In a possible implementation, the communication apparatus 1 mirrors the packet 1 from a device 5, where the device 5 is an intermediate device between the device 1 and the device 2; and the communication apparatus 1 obtains the packet information of the packet 1 based on the packet 1.

In another possible implementation, the communication apparatus 1 receives the packet information of the packet 1 sent by the device 5.

In the foregoing first implementation, after mirroring the packet 1, the device 5 sends the packet 1 to the communication apparatus 1. After receiving the packet 1, the communication apparatus 1 may read the packet 1, to obtain the packet information of the packet 1. However, in the foregoing second implementation, after mirroring the packet 1, the device 5 may read the packet information of the packet 1, and then send the packet information to the communication apparatus 1. Alternatively, the device 5 may directly mirror the packet information of the packet 1, and then send the packet information to the communication apparatus 1.

Optionally, the device 5 is a network device. In addition, the communication apparatus 1 does not necessarily obtain the packet 1 through the device 5. When the communication apparatus 1 is a network device, the communication apparatus 1 may directly mirror the packet 1 through a local port.

It may be understood that, to better learn the packet 1 to perform detection on the to-be-detected device, composition of the probe packet 1 should be consistent with composition of the packet 1 as much as possible. Therefore, the port number, the protocol type, and the payload that are included in the probe packet 1 in step 202 are consistent with the port number, the protocol type, and the payload that are of the packet 1.

In the foregoing step 202, some information that needs to be included in the probe packet 1 is described, and there is the following possible other information included in the probe packet 1.

Optionally, a destination port number of the probe packet 1 may be the destination port number of the packet 1. The destination port number of the probe packet 1 may alternatively be a port number of the to-be-detected device, a port number of a server of the to-be-detected device, or a port number of an application program in the to-be-detected device.

In a possible implementation, a destination IP address of the probe packet 1 is the destination IP address of the packet 1 or an IP address of the to-be-detected device.

In a possible implementation, a destination MAC address of the probe packet 1 is the destination MAC address of the packet 1 or a MAC address of the to-be-detected device.

It should be noted that the to-be-detected device may be a terminal device or a network device.

In addition, there are the following plurality of specific cases of a protocol on which the probe packet 1 is based.

In a possible implementation, both the probe packet 1 and the packet 1 are protocol 1 packets, and both the to-be-detected device and the device 1 support the protocol 1.

In another possible implementation, the probe packet 1 is a protocol 1 packet, the packet 1 is a protocol 2 packet, the to-be-detected device supports the protocol 1, and the device 1 supports both the protocol 1 and the protocol 2.

In the first implementation, it may be understood that, because the device 2 can communicate with the device 1 by using the packet 1, the device 1 definitely supports a protocol on which the packet 1 is based. Therefore, the probe packet 1 may be generated based on a protocol format of the packet 1, and in this case, the device 1 definitely supports a protocol which on the probe packet 1 is based.

There may be the following specific protocols on which the probe packet 1 and the packet 1 are based.

In a possible implementation, the protocol 1 includes: ONVIF, SIP, mDNS protocol, or protocols defined by manufacturers of the device 1 and the to-be-detected device.

The foregoing "protocols defined by manufacturers of the device 1 and the to-be-detected device" refer to some dedicated protocols defined by the manufacturers of the device 1 and the to-be-detected device to improve product performance or the like. For example, a model of the device 1 is M, and a manufacturer A producing the device 1 defines a dedicated protocol for devices of the M model for fast communication between the devices of the M model.

Only some protocols are listed in the foregoing implementation. This embodiment of this application is not necessarily limited to the foregoing protocols. The protocol 1 may alternatively be various types of internal of things protocols. For example, the protocol 1 may alternatively be a UDP or an IP.

In comparison with a manner in which the probe packet can be generated only based on a general protocol, in this embodiment of this application, the probe packet can be generated based on a dedicated protocol. The dedicated protocol is unique to each manufacturer, and therefore has a low probability of duplication with device-related information defined by other manufacturers. Therefore, when the probe packet generated based on the dedicated protocol is sent to to-be-detected devices, device-related information carried in received packets sent by the to-be-detected devices varies greatly. Therefore, device information of the to-be-detected device can be determined based on the device-related information varying greatly.

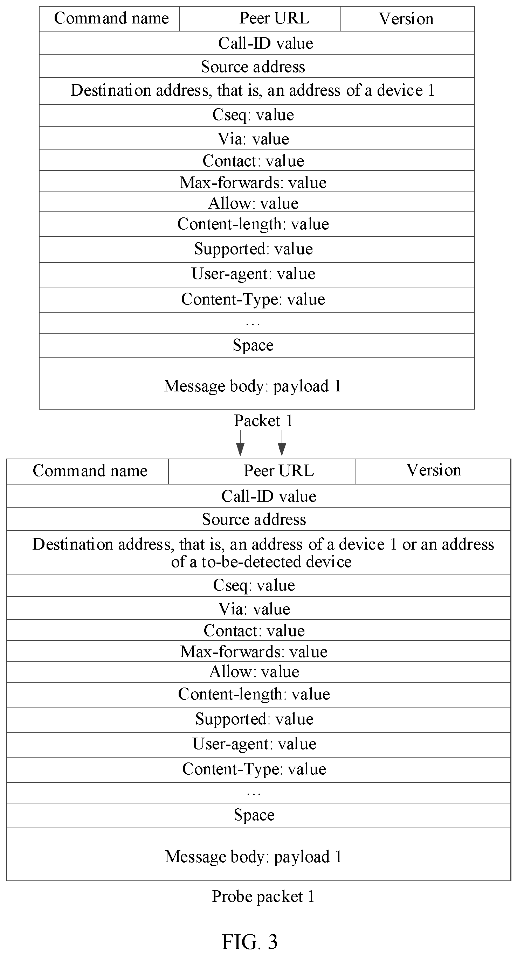

Information included in the probe packet 1 is described with reference to FIG. 3. In FIG. 3, an example in which the packet 1 is a SIP packet is used, and the probe packet 1 is also a SIP packet. The packet 1 is sent to the device 1. Therefore, a destination address is an address of the device 1, and the address of the device 1 may be the IP address or the MAC address of the device 1. Correspondingly, a destination address of the probe packet 1 is the address of the device 1 or an address of the to-be-detected device. In addition, message bodies of both the probe packet 1 and the packet 1 are the payload 1. For another example, both the probe packet 1 and the packet 1 are UDP packets. The packet 1 is sent to the device 1. Therefore, the destination port number is the port number of the device 1. Correspondingly, the destination port number of the probe packet 1 is the port number of the device 1 or the port number of the to-be-detected device. In addition, data parts of both the probe packet 1 and the packet 1 are the payload 1.

Because it cannot be ensured that all probe packets generated based on the packet 1 can be effectively used for detection on the to-be-detected device, verification on the probe packets needs to be performed. Specifically, the following implementations may be used.

In a possible implementation, information about a packet 2 sent by the device 1 to the device 2 is obtained, where the information about the packet 2 includes a payload 2. The probe packet 1 is a valid packet when the following condition is satisfied, where the condition includes: a packet 3 sent by the device 1 is received after the probe packet 1 is sent, where the packet 3 includes the payload 2.

It may be understood that, when the device 1 and the device 2 are in communication, the device 2 sends the packet 1 to the device 1, and the device 2 replies to the device 1 with the packet 2. A standard for verifying whether a learning process of the probe packet 1 is valid is whether the probe packet 1 can trigger, like the device 2, the device 1 to send a packet similar to the packet 2, that is, the packet 3. Device information is usually carried in a payload, and in this embodiment of this application, the device information needs to be detected. Therefore, when a payload included in the packet 3 is consistent with the payload included in the packet 2, it can indicate that the probe packet is valid.

When the communication apparatus 1 obtains a plurality of packets, not all the plurality of packets need to be learned. As described above, in embodiments of this application, the device information needs to be detected. Therefore, in embodiments of this application, a packet that can trigger a device to send device information needs to be learned. The device 1 and the device 2 are used as an example. The device 2 sends the packet 1 to the device 1, and the device 1 replies to the device 2 with the packet 2. If the packet 2 includes device information, the probe packet 1 is generated by learning the packet 1, and the probe packet 1 is sent to the device 1, so that the device 1 can be triggered to return a packet that is similar to the packet 2 and includes the device information. Based on this, the packet 2 including the device information in the plurality of packets is first obtained. Specifically, the following implementations may be used.

In a possible implementation, a plurality of packets sent by the device 1 to the device 2 are obtained; a key field of each of the plurality of packets is matched with a field library; and the information about the packet 2 is obtained based on a packet in the plurality of packets that successfully matches the field library.

It should be further noted that the foregoing implementation aims to find a packet including device information in the plurality of packets. Therefore, the key field in the packet is first determined, where the key field is a field that appears frequently in the packet 1. Then, the key field is matched with the field library, and a field in the field library describes commonality in the device information. Therefore, if the matching succeeds, it indicates that the key field is a field describing the device information, and further, it may be determined that a packet including the key field is the packet including the device information.

Optionally, after the plurality of packets are obtained, key fields in the packets may be extracted based on a data mining algorithm. For example, text in the packets may be analyzed and the key fields may be extracted by using a natural language processing technology such as TF-IDF, to obtain the key fields such as a type, a manufacturer, and a model that appear in the packets.

In a possible implementation, the field library includes one or more of the following fields: device brand name, device model name, device type, or device serial number.

It should be noted that the fields in the field library describe the commonality in the device information. For example, a key field of the device 1 is A1, indicating that the device is a 1^{st}-generation product of A-series devices, and a key field of the device 2 is A2, indicating that the device 2 is a 2^{nd}-generation product of the A-series devices. Commonality between A1 and A2 is that both A1 and A2 include A plus a numeric character. The field in the field library is AX, where X represents all possible numeric characters. Therefore, regardless of a key field such as A1 or A2 that appears in a packet, the key field can successfully match AX in the field library, and it is determined that A1 and A2 are fields used to describe model information of a device. When a next-generation device of a model A appears, for example, a model A 70, matching may still be performed with the field library, and a corresponding probe packet is still generated based on this. Therefore, this solution is still applicable to detection on the next-generation device of the model A. It can be learned that this solution is still well extendable to a newly emerged to-be-detected device or an unknown device, and can still be used to detect such a device. In addition, in embodiments of this application, the field library only needs to be used to store fields such as device brand name and device model name, and does not need to be used to store regular expressions and rules that are used to determine the device information. It can be learned that a data amount of the field library in embodiments of this application is small, and memory resources can be saved.

After obtaining the packet 2, the communication apparatus 1 needs to obtain the packet information of the packet 1. Specifically, the following implementations may be used.

In a possible implementation, in response to the payload 2 including the device information of the device 1, the communication apparatus 1 obtains the packet information of the packet 1 based on the information about the packet 2, and the communication apparatus 1 generates the probe packet 1 based on the packet information of the packet 1.

In a possible implementation, the communication apparatus 1 obtains the packet information of the packet 1 based on a source IP address of the packet 2 and a destination IP address of the packet 2, where the information about the packet 2 includes: the source IP address of the packet 2 and the destination IP address of the packet 2, the source IP address of the packet 2 is the IP address of the device 1, and the destination IP address of the packet 2 is an IP address of the device 2.

In a possible implementation, the communication apparatus 1 obtains the packet information of the packet 1 based on a source MAC address of the packet 2 and a destination MAC address of the packet 2, where the information about the packet 2 includes the source MAC address of the packet 2 and the destination MAC address of the packet 2, the source MAC address of the packet 2 is the MAC address of the device 1, and the destination MAC address of the packet 2 is a MAC address of the device 2.

In the foregoing implementation, the packet 1 is a packet sent by the device 2 to the device 1, the packet 2 is a packet sent by the device 1 to the device 2, a source IP address of the packet 1 is the destination IP address of the packet 2, and the destination IP address of the packet 1 is the source IP address of the packet 2. Therefore, the source IP address and the destination IP address of the packet 1 can be determined based on the packet 2. When the communication apparatus 1 obtains a plurality of packets, the communication apparatus 1 may find the packet 1 from the plurality of packets based on the source IP address and the destination IP address. Similarly, the communication apparatus 1 may alternatively obtain the packet 2 based on a source MAC address and the destination MAC address of the packet 1, or obtain the packet 2 based on a source port and a destination port of the packet 1. In addition, a protocol type of the packet 1 is also consistent with that of the packet 2, and the packet 2 may be obtained with reference to the protocol type of the packet 1.

In addition to generating the probe packet 1, the communication apparatus 1 may also generate another probe packet, to deal with a case in which the probe packet 1 is invalid. Specifically, the following cases are included.

In addition to generating the probe packet 1 by learning the packet 1, the communication apparatus 1 may further generate a probe packet 2 by learning the packet 1. Details are provided in the following.

Optionally, the communication apparatus 1 sends the probe packet 2 to the device 1, where the probe packet 2 includes the port number 1, the protocol type 1, and the payload 1.

Optionally, a destination IP address of the probe packet 2 is the destination IP address of the packet 1 or the IP address of the to-be-detected device.

Optionally, a destination MAC address of the probe packet 2 is the destination MAC address of the packet 1 or the MAC address of the to-be-detected device.

The communication apparatus 1 may further obtain another packet sent by the device 2 to the device 1, and generate a probe packet 3 by learning the packet. Details are provided in the following.

In a possible implementation, the communication apparatus 1 obtains a packet 4 sent by the device 2 to the device 1, where the packet 4 includes a port number 2, a protocol type 2, and a payload 3. The communication apparatus 1 sends the probe packet 3 to the device 1, where the probe packet 3 includes the port number 2, the protocol type 2, and the payload 3.

Optionally, a destination IP address of the probe packet 3 is a destination IP address of the packet 4 or the IP address of the to-be-detected device.

Optionally, a destination MAC address of the probe packet 3 is a destination MAC address of the packet 4 or the MAC address of the to-be-detected device.

It may be understood that the probe packet 1 is similar to the packet 1 sent by the device 2 to the device 1, and the probe packet 3 is similar to the packet 4 sent by the device 2 to the device 1. Because information carried in the packet 4 may be different from that carried in the packet 2, the probe packet 3 may also be different from the probe packet 1. This increases diversity of probe packets in this solution, so that this solution can be applied to more diversified scenarios.

The communication apparatus 1 may further obtain a packet in a communication process of another device, and generate a probe packet by learning the packet. Details are provided in the following.

In a possible implementation, the communication apparatus 1 obtains a packet 5 sent by a device 4 to a device 3, where the packet 5 includes a port number 3, a protocol type 3, and a payload 4. The communication apparatus 1 sends a probe packet 4 to the device 3, where the probe packet 4 includes the port number 3, the protocol type 3, and the payload 4.

In this solution, the device 4 and the device 2 may belong to different types of devices, and the device 3 and the device 1 may also belong to different types of devices. Probe packets obtained by learning packets of different types of devices are applicable to detection of different types of devices.

Optionally, a destination IP address of the probe packet 4 is a destination IP address of the packet 5 or the IP address of the to-be-detected device.

Optionally, a destination MAC address of the probe packet 4 is a destination MAC address of the packet 5 or the MAC address of the to-be-detected device.

Optionally, the device 3 and the device 1 may be a same device, or IP addresses of the device 3 and the device 1 belong to a same IP network segment. When the device 3 and the device 1 are the same device, packets that are sent by other devices than the device 2 to the device 1 may be obtained, and the probe packet 4 is generated based on these packets. The device 4 and the device 2 may be a same device, or IP addresses of the device 4 and the device 2 belong to a same IP network segment. When the device 4 and the device 2 are the same device, packets sent by the device 2 to other devices than the device 1 may be obtained, and the probe packet 4 is generated based on these packets. It may be understood that it is only necessary to ensure that the device 4 is different from the device 2 or the device 3 is different from the device 1, but it is not necessary to ensure that the device 4 is different from the device 2 and the device 3 is different from the device 1.

In the method 100, the probe packet 1 is obtained by learning the packet 1 sent by the device 2 to the device 1. Specifically, the port number, the protocol type, and the payload of the probe packet 1 are the same as the port number, the protocol type, and the payload of the packet 1. The device 2 may communicate with the device 1 by using the packet 1. In this case, the device 1 definitely supports the protocol on which the packet 1 is based, that is, supports the protocol on which the probe packet 1 is based. Therefore, in embodiments of this application, it is only necessary to learn the packet 1 to generate the probe packet 1, and send the probe packet 1, without a need of sending a corresponding probe packet to the to-be-detected device based on each possible protocol type. This reduces interactions with the to-be-detected device, thereby reducing network pressure.

To resolve the issue of being unable to detect the to-be-detected device when the IP address of the to-be-detected device is unknown, an embodiment of this application provides a detection method 200. The method 200 may be applied to the scenario shown in FIG. 1. When the method 200 is applied to the scenario shown in FIG. 1, a device 2 in the method 200 may be, for example, the communication apparatus 101 shown in FIG. 1, a device 1 in the method 200 may be, for example, the communication apparatus 101 shown in FIG. 1, and a communication apparatus 2 in the method 200 may be, for example, the notebook computer 102 or the switch 3 shown in FIG. 1. In the method 200, an IP segment to which an IP address of a to-be-detected device belongs is obtained, and a probe packet is sent to the IP segment, to detect the to-be-detected device. In the method 200, detection can be completed by knowing only the IP segment to which the IP address of the to-be-detected device belongs, and detection can still be performed on the to-be-detected device when the IP address of the to-be-detected device is unknown.

It should be noted that, in the method 200, the probe packet obtained through learning in the method 100 may be used to detect the to-be-detected device. In the method 200, alternatively, a probe packet obtained in another manner may be used to detect the to-be-detected device. This is not limited in this application.

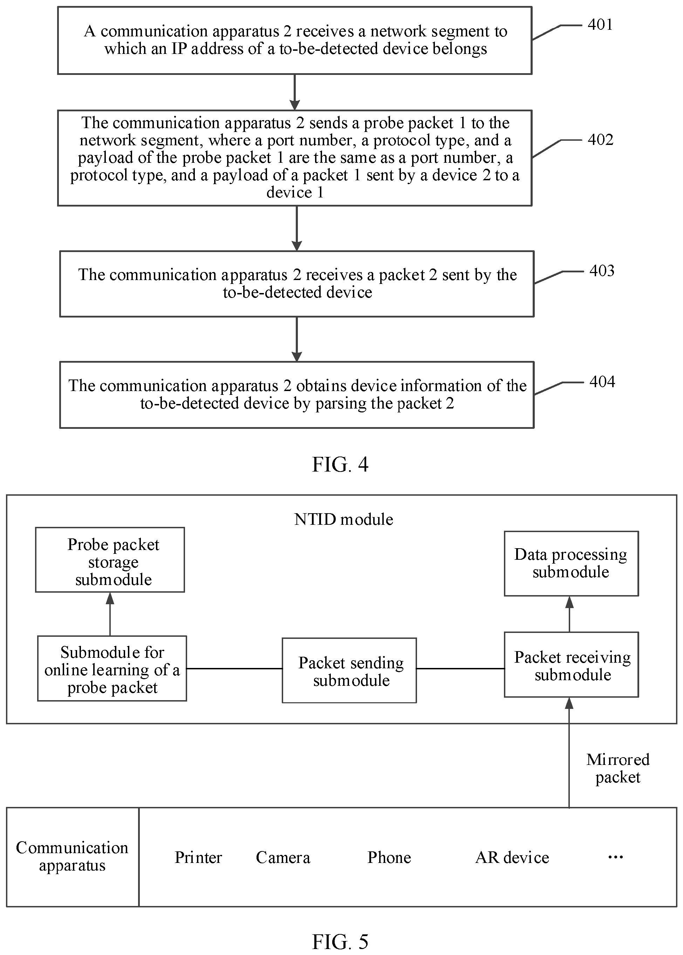

FIG. 4 is a schematic flowchart of an identification method 200 for a communication apparatus according to an embodiment of this application. As shown in FIG. 4, the method 200 provided in this embodiment of this application includes the following step 401 to step 404.

Step S401: A communication apparatus 2 receives a network segment to which an IP address of a to-be-detected device belongs.

It should be noted that the communication apparatus 2 may be the communication apparatus 1 in the method 100. In other words, the communication apparatus 1 obtains the probe packet 1 by online learning, and also detects the to-be-detected device by using the probe packet 1. The communication apparatus 2 may alternatively not be the communication apparatus 1 in the method 100. In this case, a probe packet 1 of the communication apparatus 2 may be sent by the communication apparatus 1, or may be sent by another device.

It should be noted that the probe packet 2 is not the probe packet 1 in the method 100, and the communication apparatus sends a new packet to the to-be-detected device. The probe packet 1 is still used to represent the probe packet because content included in the probe packet 1 in this phase is the same as that included in the probe packet 1 in an online learning phase of the probe packet.

It should be noted that, in this solution, the IP address of the to-be-detected device may also be obtained. Optionally, the communication apparatus 2 may receive the IP address of the to-be-detected device, and then send the probe packet 1 to the to-be-detected device. Specifically, the communication apparatus 2 may use the IP address as a destination IP address of the probe packet 1, to send the probe packet 1 to the to-be-detected device.

Step S402: The communication apparatus 2 sends the probe packet 1 to the network segment, where a port number, a protocol type, and a payload of the probe packet 1 are the same as a port number, a protocol type, and a payload of a packet 1 sent by a device 2 to a device 1.

A protocol on which the probe packet is based also has a plurality of implementations.

In a possible implementation, both the probe packet 1 and the packet 1 are protocol 1 packets, and both the to-be-detected device and the device 1 support the protocol 1.

In another possible implementation, the probe packet 1 is a protocol 1 packet, the packet 1 is a protocol 2 packet, the to-be-detected device supports the protocol 1, and the device 1 supports both the protocol 1 and the protocol 2.

In the first implementation, it may be understood that, because the device 2 can communicate with the device 1 by using the packet 1, the device 1 definitely supports a protocol on which the packet 1 is based. Therefore, the probe packet 1 may be generated based on a protocol format of the packet 1, and in this case, the device 1 definitely supports a protocol on which the probe packet 1 is based, so that the probe packet 1 can be used for communication with the device 1.

Specific protocols on which the probe packet 1 and the packet 1 are based may include the following implementations.

In a possible implementation, the protocol 1 includes: ONVIF, SIP, mDNS protocol, or protocols defined by manufacturers of the device 1 and the to-be-detected device.

In a possible implementation, the probe packet 1 is a packet based on the protocol 1, the packet 1 is a packet based on the protocol 2, the to-be-detected device supports the protocol 1, and the device 1 supports both the protocol 1 and the protocol 2.

In a possible implementation, the protocol 1 includes: ONVIF, SIP, mDNS, or protocols defined by manufacturers of the device 1 and the to-be-detected device.

For a detailed description of the foregoing implementation, refer to descriptions of the protocol of the probe packet 1 and the protocol of the packet 1 in the method 100.

Optionally, the protocol 1 may further include: TCP protocol, UDP, IP, or HTTP.

Because a protocol type of the packet 1 is not limited in this solution to a protocol that supports only point-to-point communication, such as the TCP/IP, the packet 1 may further be based on a protocol that supports a multicast or broadcast manner, for example, the SIP. Correspondingly, a destination IP address of the probe packet 1 may alternatively be a plurality of IP addresses. Details are provided in the following.

In a possible implementation, the destination IP address of the probe packet 1 is a destination IP address of the packet 1 or each IP address included in the foregoing network segment.

It may be understood that, when the destination IP address of the probe packet 1 is the same as that of the packet 1, the probe packet 1 can be sent to the device 1, and whether the probe packet 1 is valid is determined based on a packet 2 sent by the device 1. When the destination IP address of the probe packet 1 is the IP address of the to-be-detected device, the probe packet 1 can be sent to the to-be-detected device, to perform detection on the to-be-detected device.

In a possible implementation, a destination MAC address of the probe packet 1 is a destination MAC address of the packet 1 or a MAC address of the to-be-detected device.

In addition to sending the probe packet 1, the communication apparatus 2 may further send another probe packet to the to-be-detected device.

In a possible implementation, the communication apparatus 2 sends a probe packet 2 to the network segment, where a port number, a protocol type, and a payload of the probe packet 2 are the same as the port number, the protocol type, and the payload of the packet 1 sent by the device 2 to the device 1. The communication apparatus 1 receives a packet 3 sent by the to-be-detected device, and obtains device information of the to-be-detected device by parsing the packet 3.

In a possible implementation, the communication apparatus 2 sends a probe packet 2 to the network segment, where a port number, a protocol type, and a payload of the probe packet 2 are the same as a port number, a protocol type, and a payload of a packet 4 sent by the device 2 to the device 1. The communication apparatus 1 receives a packet 5 sent by the to-be-detected device, and obtains device information of the to-be-detected device by parsing the packet 5.

In a possible implementation, the communication apparatus 2 sends a probe packet 3 to the network segment, where a port number, a protocol type, and a payload of the probe packet 4 are the same as a port number, a protocol type, and a payload of a packet 6 sent by a device 3 to a device 4. The communication apparatus 1 receives a packet 7 sent by the to-be-detected device, and obtains device information of the to-be-detected device by parsing the packet 7.

When the communication apparatus 2 receives a plurality of probe packets, optionally, when a type of the to-be-detected device is known, the communication apparatus 2 first classifies the plurality of probe packets based on an applicable type, and then matches a corresponding probe packet based on the type of the to-be-detected device and sends the probe packet. For example, if the to-be-detected device is a device of a manufacturer A, a probe packet that is applicable to performing detection on the device of the manufacturer A is matched, and the probe packet is sent to the to-be-detected device. Optionally, when the type of the to-be-detected device is unknown, all probe packets obtained through learning are sent to the to-be-detected device.

Step S403: The communication apparatus 2 receives the packet 2 sent by the to-be-detected device.

It may be understood that when the communication apparatus 2 sends a plurality of probe packets, for example, the probe packet 1 and the probe packet 2, the communication apparatus 2 may receive a plurality of packets 2. In addition, when the communication apparatus 2 receives no packet 2 sent by the to-be-detected device, the communication apparatus 2 may send another probe packet to the to-be-detected device.

Step S404: The communication apparatus 2 obtains device information of the to-be-detected device by parsing the packet 2.

Optionally, the device information includes but is not limited to: device manufacturer, device model, or device type.

It should be noted that, the packet 2 includes a field indicating the device information. After the field is read, the communication apparatus 2 obtains the device information. The communication apparatus 2 may alternatively analyze text of the packet 2 in a data mining manner, to obtain the device information of the to-be-detected device.

In this solution, the communication apparatus 2 may send the probe packet 1 to the network segment to which the IP address of the to-be-detected device belongs. Even if the specific IP address of the to-be-detected device is unknown and only the network segment to which the IP address of the to-be-detected device belongs is known, detection is still performed on the to-be-detected device in this solution. It can be learned that the identification method for a communication apparatus in this application can broaden device detection scenarios.

For ease of understanding, the following describes the method 100 and the method 200 with reference to specific examples.

Embodiment 1 is a specific example in which the communication apparatus 1 in the method 100 is a network terminal identification (Network Terminal Identification, NTID) module. NTID in Embodiment 1 is merely a specific naming manner used to describe a function of online learning of a probe packet. The NTID is merely an example of a naming manner. Alternatively, the function may be described in another naming manner. The NTID and the another naming manner fall within the protection scope of this application. The NTID module may be a computer program product. The computer program product may be configured in a network device, for example, a switch, or may be configured in a terminal device, for example, a notebook computer. FIG. 5 shows a specific example in which the NTID module is configured in the switch. In FIG. 5, the NTID module of the switch includes a plurality of submodules, and each submodule includes instructions or a program. When the instructions or the program of the submodule runs on a processor of the switch, the following operations are implemented.

A packet receiving submodule receives a packet mirrored from the communication apparatus.

A submodule for online learning of a probe packet learns the mirrored packet online, to generate a probe packet.

A probe packet storage submodule stores, in a memory of the switch or an external memory, the probe packet obtained through learning by the submodule for online learning of a probe packet.

A packet sending submodule sends the probe packet.

A data processing submodule performs data processing on the packet obtained from the communication apparatus.

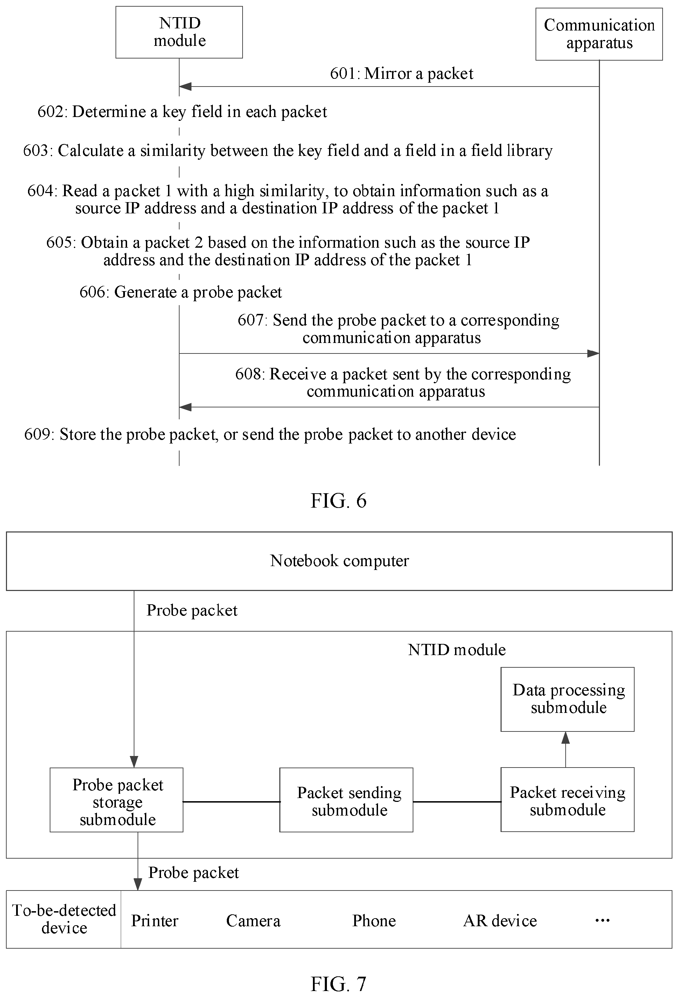

FIG. 6 is a diagram according to Embodiment 1. A specific procedure in FIG. 6 includes the following steps.

Step 601: The NTID module mirrors a packet from the communication apparatus.

It should be noted that the communication apparatus includes a terminal device and a network device. The NTID module may receive, through the packet receiving submodule, the packet mirrored from the communication apparatus, and then send the packet to the submodule for online learning of a probe packet or the data processing submodule, so that the submodule for online learning of a probe packet or the data processing submodule performs step 602.

Step 602: The NTID module determines a key field in each packet.

"Each packet" in step 602 is each packet obtained in step 601. In step 602, the NTID module may analyze text of each packet and extract a key field based on a data mining algorithm, for example, a TF-IDF algorithm, to obtain key fields such as a type, a manufacturer, and a model that appear in each packet.

Step 603: The NTID module calculates a similarity between the key field and a field in a field library.

In step 603, the key field is the key field extracted in step 602, and the field library is a local field library or a cloud field library. The field library includes a field used to describe commonality in device information, for example, a computer model plus a numeric character. The NTID module uses a similarity algorithm to calculate the similarity between the key field and the field in the field library. If the similarity is higher than a threshold, it indicates that the key field is a field describing the device information, and step 604 continues to be performed. If the similarity is lower than or equal to the threshold, it is considered as that the field is not the field describing the device information, and step 601 is performed again.

Step 604: The NTID module reads a packet 1 with a high similarity, to obtain information such as a source IP address and a destination IP address of the packet 1.

When the similarity that is obtained through calculation in step 603 and that is between the key field and the field in the field library is greater than the threshold, the packet 1 to which the key field belongs is read.

Step 605: The NTID module obtains a packet 2 based on the information such as the source IP address and the destination IP address of the packet 1.

Assuming that the packet 1 is a packet sent by a device A to a device B, the packet 2 is a packet sent by the device B to the device A. More specifically, the source IP address of the packet 1 is an address of the device A, the destination IP address of the packet 1 is an address of the device B, a source IP address of the packet 2 is the address of the device B, and a destination IP address of the packet 2 is the address of the device A. Therefore, the source IP address and the destination IP address of the packet 2 may be determined based on the source IP address and the destination IP address of the packet 1, to obtain the packet 2 based on the source IP address and the destination IP address. Similarly, the communication apparatus 1 may alternatively obtain the packet 2 based on a source MAC address and a destination MAC address of the packet 1, or obtain the packet 2 based on a source port and a destination port of the packet 1. In addition, a protocol type of the packet 1 is also consistent with that of the packet 2, and the packet 2 may be obtained with reference to the protocol type of the packet 1.

Step 606: The NTID module generates a probe packet.

After obtaining the packet 2, the NTID module generates the probe packet by learning the packet 2. Specifically, a port number, a payload, and a protocol type of the probe packet are consistent with a port number, a payload, and the protocol type of the packet 2.

Step 607: The NTID module sends the probe packet to a corresponding communication apparatus.

The "corresponding communication apparatus" in step 607 refers to a communication apparatus that receives the packet 2.

After step 607, a packet sent by the corresponding communication apparatus may fail to be received, in other words, step 608 cannot be performed. In this case, step 601 is performed again, and learning for a probe packet is performed again.

Step 608: The NTID module receives the packet sent by the corresponding communication apparatus.

Step 607 and step 608 are to verify validity of the probe packet. A principle is as follows. The probe packet is sent to the communication apparatus that receives the packet 2. If the packet sent by the communication apparatus can be received, and a keyword that is in the packet and that is extracted by using an algorithm like data mining is consistent with the key field determined in step 602, it indicates that the probe packet can trigger, like the packet 2, the communication apparatus to send the packet including the device information. Therefore, the probe packet is valid, and step 609 continues to be performed. If the packet sent by the communication apparatus cannot be received, or the packet sent by the communication apparatus does not include a key field consistent with that in step 602, it indicates that the probe packet is invalid. In this case, step 601 is performed again, and learning for a probe packet is performed again.

Step 609: The NTID module stores the probe packet, or sends the probe packet to another device.

After the probe packet is verified to be valid in step 607 and step 608, the probe packet may be stored in the probe packet storage submodule of the NTID, or the probe packet may be sent to another device, for example, a communication apparatus for detecting a to-be-detected device.

After step 609, the NTID module may repeatedly perform step 601 to step 609, continuously mirror a new packet from the communication apparatus, and then perform learning for a probe packet based on the new packet.

### Embodiment 2

Embodiment 2 is a specific example in which the communication apparatus 2 in the method 200 is an NTID module. NTID in Embodiment 2 is merely a specific naming manner used to describe a device identification function. The NTID is merely an example of a naming manner. Alternatively, the function may be described in another naming manner. The NTID and the another naming manner fall within the protection scope of this application. The NTID module may be a computer program product. The computer program product may be configured in a switch, or may be configured in a notebook computer. FIG. 7 is a specific example in which the NTID module is configured in the switch. As shown in FIG. 7, the NTID module receives a probe packet sent by the notebook computer, and performs detection on a to-be-detected device by using the probe packet. In Embodiment 2, the NTID module of the switch includes a plurality of submodules, and each submodule includes instructions or a program. When the instructions or the program of the submodule runs on a processor of the switch, the following operations are implemented.

A packet receiving submodule receives the probe packet sent by the notebook computer, and receives, after sending the probe packet to the to-be-detected device, a packet returned by the to-be-detected device.

A probe packet storage submodule stores, in a memory of the switch or an external memory, the probe packet sent by the notebook computer.

A packet sending submodule sends the probe packet.

A data processing submodule performs data processing on the packet returned by the to-be-detected device.

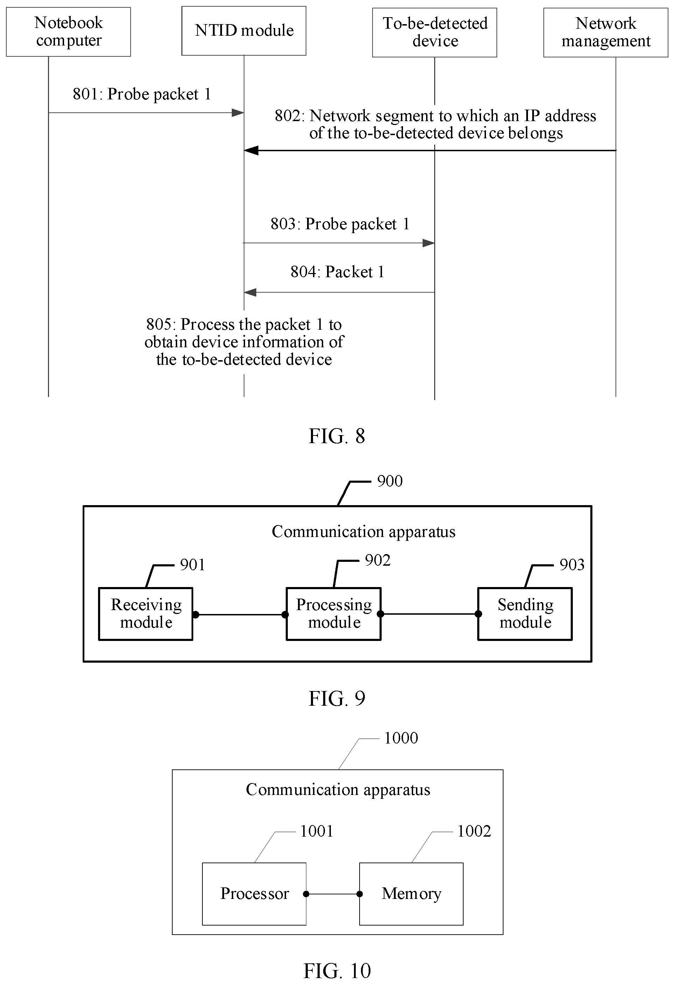

FIG. 8 is a diagram according to Embodiment 2. A specific procedure in FIG. 8 includes the following steps.

Step 801: The notebook computer sends a probe packet to the NTID module.

In Embodiment 2, when the notebook computer obtains the probe packet through learning by using the method 100, both the notebook computer and a communication apparatus for learning for the probe packet may be connected to the switch. The NTID module of the switch may mirror packets used for the communication apparatus to the notebook computer. The notebook computer learns these packets to obtain probe packets. Then, the notebook computer sends the probe packets to the NTID module.

Step 802: The NTID module receives a network segment to which an IP address of the to-be-detected device belongs.

The network segment to which the IP address of the to-be-detected device belongs may be sent by a network management to the NTID module.

Step 803: The NTID module sends the probe packet to the network segment.

The network segment in step 803 is "the network segment to which the IP address of the to-be-detected device belongs" in step 802, and the NTID module may periodically send the probe packet to the network segment.

Step 804: The NTID module receives a packet sent by the probe packet.

The switch may distribute, to the NTID module, the packet sent by the to-be-detected device.

Step 805: The NTID module processes the packet to obtain device information of the to-be-detected device.

The NTID module may extract the device information in text of the packet based on a data mining algorithm such as a TF-IDF algorithm.

The above describes embodiments of this application from a perspective of the methods. The following describes communication apparatuses in embodiments of this application from a perspective of specific apparatus implementations.

FIG. 9 is a diagram of a structure of a communication apparatus according to an embodiment of this application. As shown in FIG. 9, a communication apparatus 900 includes a receiving module 901, a processing module 902, and a sending module 903. In an example, the communication apparatus 900 may implement the function of the communication apparatus 1 in the foregoing method 100, and therefore may also implement beneficial effects of the foregoing method 100.

Specifically, the processing module 902 is configured to obtain information about a first packet sent by a second device to a first device, where the information about the first packet includes a first port number, a first protocol type, and a first payload; and the receiving module 901 is configured to send a first probe packet to the first device, where the first probe packet includes the first port number, the first protocol type, and the first payload.

In a possible implementation, the processing module 902 is further configured to obtain information about a second packet sent by the first device to the second device, where the information about the second packet includes a second payload; and the first probe packet is a valid packet when the following condition is satisfied, where the condition includes: a third packet sent by the first device is received after the first probe packet is sent, where the third packet includes the second payload.

In a possible implementation, a destination IP address of the first probe packet is a destination IP address of the first packet or an IP address of a to-be-detected device; and/or a destination MAC address of the first probe packet is a destination MAC address of the first packet or a MAC address of the to-be-detected device.

In a possible implementation, the processing module 902 is further configured to obtain information about a fourth packet sent by the second device to the first device, where the information about the fourth packet includes a second port number, a second protocol type, and a third payload; and the sending module 903 is further configured to send a second probe packet to the first device, where the second probe packet includes the second port number, the second protocol type, and the third payload.

In a possible implementation, the processing module 902 is further configured to obtain information about a fifth packet sent by a fourth device to a third device, where the information about the fifth packet includes a third port number, a third protocol type, and a fourth payload; and the sending module 903 is further configured to send a third probe packet to the third device, where the third probe packet includes the third port number, the third protocol type, and the fourth payload.

In a possible implementation, the destination IP address of the first packet is a multicast or broadcast IP address or an IP address of the first device; and/or
in a possible implementation, the destination MAC address of the first packet is a multicast or broadcast MAC address or a MAC address of the first device.

In a possible implementation, both the first probe packet and the first packet are first protocol packets, and both the to-be-detected device and the first device support the first protocol.

In a possible implementation, the first probe packet is the first protocol packet, the first packet is a second protocol packet, the to-be-detected device supports the first protocol, and the first device supports both the first protocol and the second protocol.

In a possible implementation, the first protocol includes: ONVIF, SIP, mDNS, or protocols defined by manufacturers of the first device and the to-be-detected device.

In a possible implementation, the processing module 902 is further configured to: mirror the first packet from a fifth device, where the fifth device is an intermediate device between the first device and the second device; and obtain the information about the first packet based on the first packet.

In a possible implementation, the receiving module 901 is further configured to receive the information about the second packet sent by the fifth device.

In a possible implementation, the processing module 902 is further configured to: obtain a plurality of packets sent by the first device to the second device; match a key field of each of the plurality of packets with a field library; and obtain the information about the second packet based on a packet in the plurality of packets that successfully matches the field library.

In a possible implementation, the field library includes one or more of the following fields: device brand name, device model name, device type, or device serial number.

In a possible implementation, the processing module 902 is further configured to: in response to the second payload including device information of the first device, obtain the information about the first packet based on the information about the second packet; and generate the first probe packet based on the information about the first packet.

In a possible implementation, the processing module 902 is further configured to: obtain the information about the first packet based on a source IP address of the second packet and a destination IP address of the second packet, where the information about the second packet includes: the source IP address of the second packet and the destination IP address of the second packet, the source IP address of the second packet is the IP address of the first device, and the destination IP address of the second packet is an IP address of the second device; and/or obtain the information about the first packet based on a source MAC address of the second packet and a destination MAC address of the second packet, where the information about the second packet includes: the source MAC address of the second packet and the destination MAC address of the second packet, the source MAC address of the second packet is the MAC address of the first device, and the destination MAC address of the second packet is a MAC address of the second device.

In a possible implementation, the sending module 903 is further configured to send the first probe packet to the to-be-detected device; the receiving module 901 is further configured to receive a sixth packet sent by the to-be-detected device; and the processing module 902 is further configured to obtain device information of the to-be-detected device by parsing the sixth packet.

In a possible implementation, the sending module 903 is further configured to send the second probe packet to the to-be-detected device; the receiving module 901 is further configured to receive a seventh packet sent by the to-be-detected device; and the processing module 902 is further configured to obtain device information of the to-be-detected device by parsing the seventh packet.

In a possible implementation, the sending module 903 is further configured to send the third probe packet to the to-be-detected device; the receiving module 901 is further configured to receive an eighth packet sent by the to-be-detected device; and the processing module 902 is further configured to obtain device information of the to-be-detected device by parsing the eighth packet.

In another example, the communication apparatus 900 may implement the function of the communication apparatus 2 in the foregoing method 200, and therefore may also implement beneficial effects of the foregoing method 200.

Specifically, the receiving module 901 is configured to receive a network segment to which the IP address of the to-be-detected device belongs; the sending module 903 is further configured to send the first probe packet to the network segment, where a port number, a protocol type, and a payload of the first probe packet are the same as a port number, a protocol type, and a payload of the first packet sent by the second device to the first device; the receiving module 901 is further configured to receive the second packet sent by the to-be-detected device; and the processing module 902 is configured to obtain device information of the to-be-detected device by parsing the second packet.

In a possible implementation, both the first probe packet and the first packet are first protocol packets, and both the to-be-detected device and the first device support the first protocol.

In a possible implementation, the first probe packet is the first protocol packet, the first packet is a second protocol packet, the to-be-detected device supports the first protocol, and the first device supports both the first protocol and the second protocol.

In a possible implementation, the first protocol includes: ONVIF, SIP, mDNS, or protocols defined by manufacturers of the first device and the to-be-detected device.

In a possible implementation, a destination IP address of the first probe packet is a destination IP address of the first packet or each IP address included in the network segment; and/or a destination MAC address of the first probe packet is a destination MAC address of the first packet or a MAC address of the to-be-detected device.

In a possible implementation, the sending module 903 is further configured to send a second probe packet to the network segment, where a port number, a protocol type, and a payload of the second probe packet are the same as a port number, a protocol type, and a payload of a third packet sent by the second device to the first device; the receiving module 901 is further configured to receive a fourth packet sent by the to-be-detected device; and the processing module 902 is further configured to obtain device information of the to-be-detected device by parsing the fourth packet.

In a possible implementation, the sending module 903 is further configured to send a third probe packet to the network segment, where a port number, a protocol type, and a payload of the third probe packet are the same as a port number, a protocol type, and a payload of a fifth packet sent by a third device to a fourth device; the receiving module 901 is further configured to receive a sixth packet sent by the to-be-detected device; and the processing module 902 is further configured to obtain device information of the to-be-detected device by parsing the sixth packet.

In still another implementation example, the communication apparatus 900 may implement the function of the to-be-detected device in the method 200, and therefore may also implement beneficial effects of the foregoing method 200.

Specifically, the receiving module 901 is configured to receive the first probe packet sent by the third device, where a port number, a protocol type, and a payload of the first probe packet are the same as a port number, a protocol type, and a payload of the first packet sent by the second device to the first device; and the sending module 903 is configured to send the first packet to the third device, where the first packet includes the device information of the to-be-detected device.

FIG. 10 is a diagram of a structure of a communication apparatus 1000 according to an embodiment of this application. As shown in FIG. 10, the communication apparatus 1000 includes a processor 1001 and a memory 1002.

The memory 1002 is configured to store computer readable instructions. The processor 1001 is configured to invoke the computer readable instructions, and may perform all or a part of operations of the method 100 or the method 200 based on indications of the computer readable instructions.

In a specific implementation, the communication apparatus 1000 may include a communication interface. The memory 1002, the processor 1001, and the communication interface are communicatively connected. The communication interface is configured to implement a receiving and sending operation, and the processor 1001 is configured to implement an operation other than the receiving and sending operation.

In embodiments of this application, the processor may be, for example, but is not limited to, any one or a combination of the following: central processing unit (central processing unit, CPU), network processor (network processor, NP), tensor processing unit (Tensor Processing Unit, TPU), neural network processing unit (Neural network Processing Unit, NPU), application-specific integrated circuit (application-specific integrated circuit, ASIC), and programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. The processor may be one processor, or may include a plurality of processors. The processor may include one or more processing cores, and the processor executes various functional applications and data processing by running a computer program. The processor may be connected to the memory and the communication interface through a communications bus.

In embodiments of this application, the memory may include a volatile memory (volatile memory), for example, a random access memory (random access memory, RAM). The memory may alternatively include a non-volatile memory (non-volatile memory), such as a flash memory (flash memory), a hard disk drive (hard disk drive, HDD), or a solid-state drive (solid-state drive, SSD). The memory may alternatively include a combination of the foregoing types of memories. The memory may be one memory, or may include a plurality of memories. In a specific implementation, the memory stores computer readable instructions, and the computer readable instructions include a plurality of software modules, for example, the receiving module 901, the processing module 902, and the sending module 903 described above. After executing each software module, the processor may perform a corresponding operation based on an indication of each software module. In this embodiment, an operation performed by a software module is actually an operation performed by the processor based on an indication of the software module. After executing the computer readable instructions in the memory, the processor may perform, based on the indications of the computer readable instructions, all or a part of operations that may be performed by the communication apparatus.

In embodiments of this application, there may be a plurality of communication interfaces, and the communication interface is configured to communicate with another device. The communication interface may include a wired communication interface, a wireless communication interface, or a combination thereof. The wired communication interface may be, for example, an ethernet interface. The ethernet interface may be an optical interface, an electrical interface, or a combination thereof. The wireless communication interface may be a wireless local area network (wireless local area network, WLAN) interface, a cellular network communication interface, a combination thereof, or the like.

All or a part of the foregoing embodiments may be implemented by hardware, firmware, or any combination thereof. When software is involved in a specific implementation process, the software may be completely or partially embodied in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

The following describes a system in an embodiment of this application by using an example.

An embodiment of this application further provides a communication system, including a plurality of communication apparatuses. The plurality of communication apparatuses may include, for example, a communication apparatus configured to implement a part of or all operations of any one of the foregoing methods.

A person of ordinary skill in the art may understand that all or a part of the steps of the foregoing embodiments may be implemented by hardware or a program instructing related hardware. The program may be stored in a computer-readable storage medium. The storage medium may be a read-only memory, a magnetic disk, an optical disc, or the like.

In embodiments of this application, the terms "first", "second", and "third" are merely used for description, but cannot be understood as an indication or implication of relative importance.

The term "and/or" in this application describes only an association relationship between associated objects and indicates that three relationships may exist. For example, A and/or B may represent the following three cases: Only A exists, both A and B exist, and only B exists. In addition, the character "/" in this specification generally indicates an "or" relationship between the associated objects.

The foregoing descriptions are merely optional embodiments of this application, but are not intended to limit this application. Any modification, equivalent replacement, improvement, or the like made within the concept and principle of this application shall fall within the protection scope of this application.

## Claims

1. A method for online learning of a probe packet, wherein the method comprises:
obtaining information about a first packet sent by a second device to a first device, wherein the information about the first packet comprises a first port number, a first protocol type, and a first payload; and
sending a first probe packet to the first device, wherein the first probe packet comprises the first port number, the first protocol type, and the first payload.

2. The method for online learning of a probe packet according to claim 1, wherein the method further comprises:
obtaining information about a second packet sent by the first device to the second device, wherein the information about the second packet comprises a second payload; and
the first probe packet is a valid packet when the following condition is satisfied, wherein the condition comprises: a third packet sent by the first device is received after the first probe packet is sent, wherein the third packet comprises the second payload.

3. The method for online learning of a probe packet according to claim 1 or 2, wherein a destination IP address of the first probe packet is a destination IP address of the first packet or an IP address of a to-be-detected device; and/or a destination MAC address of the first probe packet is a destination MAC address of the first packet or a MAC address of the to-be-detected device.

4. The method for online learning of a probe packet according to any one of claims 1 to 3, wherein the method further comprises:
obtaining information about a fourth packet sent by the second device to the first device, wherein the information about the fourth packet comprises a second port number, a second protocol type, and a third payload; and
sending a second probe packet to the first device, wherein the second probe packet comprises the second port number, the second protocol type, and the third payload.

5. The method for online learning of a probe packet according to any one of claims 1 to 4, wherein the method further comprises:
obtaining information about a fifth packet sent by a fourth device to a third device, wherein the information about the fifth packet comprises a third port number, a third protocol type, and a fourth payload; and
sending a third probe packet to the third device, wherein the third probe packet comprises the third port number, the third protocol type, and the fourth payload.

6. The method for online learning of a probe packet according to any one of claims 1 to 5, wherein the destination IP address of the first packet is a multicast or broadcast IP address or an IP address of the first device; and/or the destination MAC address of the first packet is a multicast or broadcast MAC address or a MAC address of the first device.

7. The method for online learning of a probe packet according to any one of claims 1 to 6, wherein both the first probe packet and the first packet are first protocol packets, and both the to-be-detected device and the first device support the first protocol.

8. The method for online learning of a probe packet according to any one of claims 1 to 6, wherein the first probe packet is the first protocol packet, the first packet is a second protocol packet, the to-be-detected device supports the first protocol, and the first device supports both the first protocol and the second protocol.

9. The method for online learning of a probe packet according to claim 7 or 8, wherein the first protocol comprises: ONVIF, SIP, mDNS, or protocols defined by manufacturers of the first device and the to-be-detected device.

10. The method for online learning of a probe packet according to any one of claims 1 to 9, wherein the obtaining the information about the first packet sent by the second device to the first device comprises:
mirroring the first packet from a fifth device, wherein the fifth device is an intermediate device between the first device and the second device; and
obtaining the information about the first packet based on the first packet.

11. The method for online learning of a probe packet according to any one of claims 1 to 10, wherein the obtaining the information about the second packet sent by the first device to the second device comprises:
receiving the information about the second packet sent by the fifth device.

12. The method for online learning of a probe packet according to any one of claims 1 to 11, wherein the obtaining the information about the second packet sent by the first device to the second device comprises:
obtaining a plurality of packets sent by the first device to the second device;
matching a key field of each of the plurality of packets with a field library; and
obtaining the information about the second packet based on a packet in the plurality of packets that successfully matches the field library.

13. The method for online learning of a probe packet according to claim 12, wherein the field library comprises one or more of the following fields: device brand name, device model name, device type, or device serial number.

14. The method for online learning of a probe packet according to any one of claims 2 to 13, wherein before sending the first probe packet, the method further comprises:
in response to the second payload comprising device information of the first device, obtaining the information about the first packet based on the information about the second packet; and
generating the first probe packet based on the information about the first packet.

15. The method for online learning of a probe packet according to claim 14, wherein the obtaining the information about the first packet based on the information about the second packet comprises:
obtaining the information about the first packet based on a source IP address of the second packet and a destination IP address of the second packet, wherein the information about the second packet comprises: the source IP address of the second packet and the destination IP address of the second packet, the source IP address of the second packet is the IP address of the first device, and the destination IP address of the second packet is an IP address of the second device; and/or
obtaining the information about the first packet based on a source MAC address of the second packet and a destination MAC address of the second packet, wherein the information about the second packet comprises: the source MAC address of the second packet and the destination MAC address of the second packet, the source MAC address of the second packet is the MAC address of the first device, and the destination MAC address of the second packet is a MAC address of the second device.

16. The method for online learning of a probe packet according to any one of claims 1 to 15, wherein after sending the first probe packet to the first device, the method further comprises:
sending the first probe packet to the to-be-detected device;
receiving a sixth packet sent by the to-be-detected device; and
obtaining device information of the to-be-detected device by parsing the sixth packet.

17. The method for online learning of a probe packet according to any one of claims 4 to 16, wherein after sending the second probe packet to the first device, the method further comprises:
sending the second probe packet to the to-be-detected device;
receiving a seventh packet sent by the to-be-detected device; and
obtaining device information of the to-be-detected device by parsing the seventh packet.

18. The method for online learning of a probe packet according to any one of claims 5 to 17, wherein after sending the third probe packet to the third device, the method further comprises:
sending the third probe packet to the to-be-detected device;
receiving an eighth packet sent by the to-be-detected device; and
obtaining device information of the to-be-detected device by parsing the eighth packet.

19. An identification method for a communication apparatus, wherein the method comprises:
receiving a network segment to which an IP address of a to-be-detected device belongs;
sending a first probe packet to the network segment, wherein a port number, a protocol type, and a payload of the first probe packet are the same as a port number, a protocol type, and a payload of a first packet sent by a second device to a first device;
receiving a second packet sent by the to-be-detected device; and
obtaining device information of the to-be-detected device by parsing the second packet.

20. The identification method for a communication apparatus according to claim 19, wherein both the first probe packet and the first packet are first protocol packets, and both the to-be-detected device and the first device support the first protocol.

21. The identification method for a communication apparatus according to claim 19, wherein the first probe packet is the first protocol packet, the first packet is a second protocol packet, the to-be-detected device supports the first protocol, and the first device supports both the first protocol and the second protocol.

22. The identification method for a communication apparatus according to claim 20 or 21, wherein the first protocol comprises: ONVIF, SIP, mDNS, or protocols defined by manufacturers of the first device and the to-be-detected device.

23. The identification method for a communication apparatus according to any one of claims 19 to 22, wherein a destination IP address of the first probe packet is a destination IP address of the first packet or each IP address comprised in the network segment; and/or a destination MAC address of the first probe packet is a destination MAC address of the first packet or a MAC address of the to-be-detected device.

24. The identification method for a communication apparatus according to any one of claims 19 to 23, wherein the method further comprises:
sending the second probe packet to the network segment, wherein a port number, a protocol type, and a payload of the second probe packet are the same as a port number, a protocol type, and a payload of a third packet sent by the second device to the first device;
receiving a fourth packet sent by the to-be-detected device; and
obtaining device information of the to-be-detected device by parsing the fourth packet.

25. The identification method for a communication apparatus according to any one of claims 19 to 24, wherein the method further comprises:
sending the third probe packet to the network segment, wherein a port number, a protocol type, and a payload of the third probe packet are the same as a port number, a protocol type, and a payload of a fifth packet sent by a third device to a fourth device;
receiving a sixth packet sent by the to-be-detected device; and
obtaining device information of the to-be-detected device by parsing the sixth packet.

26. A packet sending method, wherein the method comprises:
receiving a first probe packet sent by a third device, wherein a port number, a protocol type, and a payload of the first probe packet are the same as a port number, a protocol type, and a payload of a first packet sent by a second device to a first device; and
sending the first packet to the third device, wherein the first packet comprises device information of a to-be-detected device.

27. A communication apparatus, comprising a communication interface and a processor, wherein
the communication interface and the processor perform the method according to any one of claims 1 to 18.

28. A communication apparatus, comprising a communication interface and a processor, wherein
the communication interface and the processor perform the method according to any one of claims 19 to 25.

29. A communication apparatus, comprising a communication interface and a processor, wherein
the communication interface and the processor perform the method according to claim 26.

30. A communication apparatus, comprising:
a processing unit, configured to obtain information about a first packet sent by a second device to a first device, wherein the information about the first packet comprises a first port number, a first protocol type, and a first payload; and
a transceiver unit, configured to send a first probe packet to the first device, wherein the first probe packet comprises the first port number, the first protocol type, and the first payload.

31. The apparatus according to claim 30, wherein
the processing unit is further configured to obtain information about a second packet sent by the first device to the second device, wherein the information about the second packet comprises a second payload; and
the first probe packet is a valid packet when the following condition is satisfied, wherein the condition comprises: after sending the first probe packet, the transceiver unit receives a third packet sent by the first device, wherein the third packet comprises the second payload.

32. The apparatus according to claim 30 or 31, wherein a destination IP address of the first probe packet is a destination IP address of the first packet or an IP address of a to-be-detected device; and/or a destination MAC address of the first probe packet is a destination MAC address of the first packet or a MAC address of the to-be-detected device.

33. The apparatus according to any one of claims 30 to 32, wherein
the processing unit is further configured to obtain information about a fourth packet sent by the second device to the first device, wherein the information about the fourth packet comprises a second port number, a second protocol type, and a third payload; and
the transceiver unit is further configured to send a second probe packet to the first device, wherein the second probe packet comprises the second port number, the second protocol type, and the third payload.

34. The apparatus according to any one of claims 30 to 33, wherein
the processing unit is further configured to obtain information about a fifth packet sent by a fourth device to a third device, wherein the information about the fifth packet comprises a third port number, a third protocol type, and a fourth payload; and
the transceiver unit is further configured to send a third probe packet to the third device, wherein the third probe packet comprises the third port number, the third protocol type, and the fourth payload.

35. The apparatus according to any one of claims 30 to 34, wherein the destination IP address of the first packet is a multicast or broadcast IP address or an IP address of the first device; and/or the destination MAC address of the first packet is a multicast or broadcast MAC address or a MAC address of the first device.

36. The apparatus according to any one of claims 30 to 35, wherein both the first probe packet and the first packet are first protocol packets, and both the to-be-detected device and the first device support the first protocol.

37. The apparatus according to any one of claims 30 to 35, wherein the first probe packet is the first protocol packet, the first packet is a second protocol packet, the to-be-detected device supports the first protocol, and the first device supports both the first protocol and the second protocol.

38. The apparatus according to claim 36 or 37, wherein the first protocol comprises: ONVIF, SIP, mDNS, or protocols defined by manufacturers of the first device and the to-be-detected device.

39. The apparatus according to any one of claims 30 to 38, wherein
the processing unit is further configured to: mirror the first packet from a fifth device, wherein the fifth device is an intermediate device between the first device and the second device; and
obtain the information about the first packet based on the first packet.

40. The apparatus according to any one of claims 30 to 39, wherein
the transceiver unit is further configured to receive the information about the second packet sent by the fifth device.

41. The apparatus according to any one of claims 30 to 40, wherein
the processing unit is further configured to: obtain a plurality of packets sent by the first device to the second device;
match a key field of each of the plurality of packets with a field library; and
obtain the information about the second packet based on a packet in the plurality of packets that successfully matches the field library.

42. The apparatus according to claim 41, wherein the field library comprises one or more of the following fields: device brand name, device model name, device type, or device serial number.

43. The apparatus according to any one of claims 31 to 42, wherein
the processing unit is further configured to: in response to the second payload comprising device information of the first device, obtain the information about the first packet based on the information about the second packet; and
generate the first probe packet based on the information about the first packet.

44. The apparatus according to claim 43, wherein
the processing unit is further configured to obtain the information about the first packet based on a source IP address of the second packet and a destination IP address of the second packet, wherein the information about the second packet comprises: the source IP address of the second packet and the destination IP address of the second packet, the source IP address of the second packet is the IP address of the first device, and the destination IP address of the second packet is an IP address of the second device; and/or
obtain the information about the first packet based on a source MAC address of the second packet and a destination MAC address of the second packet, wherein the information about the second packet comprises: the source MAC address of the second packet and the destination MAC address of the second packet, the source MAC address of the second packet is the MAC address of the first device, and the destination MAC address of the second packet is a MAC address of the second device.

45. The apparatus according to any one of claims 30 to 44, wherein
the transceiver unit is further configured to: send the first probe packet to the to-be-detected device; and
receive a sixth packet sent by the to-be-detected device; and
the processing unit is further configured to obtain device information of the to-be-detected device by parsing the sixth packet.

46. The apparatus according to any one of claims 33 to 45, wherein
the transceiver unit is further configured to: send the second probe packet to the to-be-detected device; and
receive a seventh packet sent by the to-be-detected device; and
the processing unit is further configured to obtain device information of the to-be-detected device by parsing the seventh packet.

47. The apparatus according to any one of claims 34 to 46, wherein
the transceiver unit is further configured to: send the third probe packet to the to-be-detected device; and
receive an eighth packet sent by the to-be-detected device; and
the processing unit is further configured to obtain device information of the to-be-detected device by parsing the eighth packet.

48. A communication apparatus, comprising:
a transceiver unit, configured to: receive a network segment to which an IP address of a to-be-detected device belongs;
send a first probe packet to the network segment, wherein a port number, a protocol type, and a payload of the first probe packet are the same as a port number, a protocol type, and a payload of a first packet sent by a second device to a first device; and
receive a second packet sent by the to-be-detected device; and
a processing unit, configured to obtain device information of the to-be-detected device by parsing the second packet.

49. The apparatus according to claim 48, wherein both the first probe packet and the first packet are first protocol packets, and both the to-be-detected device and the first device support the first protocol.

50. The apparatus according to claim 48, wherein the first probe packet is the first protocol packet, the first packet is a second protocol packet, the to-be-detected device supports the first protocol, and the first device supports both the first protocol and the second protocol.

51. The apparatus according to claim 49 or 50, wherein the first protocol comprises: ONVIF, SIP, mDNS, or protocols defined by manufacturers of the first device and the to-be-detected device.

52. The apparatus according to any one of claims 48 to 51, wherein a destination IP address of the first probe packet is a destination IP address of the first packet or each IP address comprised in the network segment; and/or a destination MAC address of the first probe packet is a destination MAC address of the first packet or a MAC address of the to-be-detected device.

53. The apparatus according to any one of claims 48 to 52, wherein
the transceiver unit is further configured to: send the second probe packet to the network segment, wherein a port number, a protocol type, and a payload of the second probe packet are the same as a port number, a protocol type, and a payload of a third packet sent by the second device to the first device; and
receive a fourth packet sent by the to-be-detected device; and
the processing unit is further configured to obtain device information of the to-be-detected device by parsing the fourth packet.

54. The apparatus according to any one of claims 48 to 53, wherein
the processing unit is further configured to: send the third probe packet to the network segment, wherein a port number, a protocol type, and a payload of the third probe packet are the same as a port number, a protocol type, and a payload of a fifth packet sent by a third device to a fourth device;
receive a sixth packet sent by the to-be-detected device; and
obtain device information of the to-be-detected device by parsing the sixth packet.

55. A communication apparatus, comprising:
a transceiver unit, configured to: receive a first probe packet sent by a third device, wherein a port number, a protocol type, and a payload of the first probe packet are the same as a port number, a protocol type, and a payload of a first packet sent by a second device to a first device; and
send the first packet to the third device, wherein the first packet comprises device information of a to-be-detected device.

56. A computer program product comprising instructions, wherein when a computer runs the computer program product, the computer is enabled to perform the method according to any one of claims 1 to 26.

57. A communication system, wherein the system comprises the communication apparatus according to claim 27 or any one of claims 30 to 47, the communication apparatus according to claim 28 or any one of claims 48 to 54, and the communication apparatus according to claim 29 or 55.
